# EUROPEAN PATENT APPLICATION

(11) **EP 4 808 012 A2**
(43) Date of publication of application: **16.09.2026**
(21) Application number: 26195351.7
(22) Date of filing: 12.08.2022
(51) Int. Cl.: H04B 7/08

(54) **UE-ASSISTED TIME DOMAIN BEAM PREDICTION**

(62) Document number(s) of the earlier application(s) in accordance with Art. 76 EPC: 22777590.5 / 4 555 639
(71) Applicant: Google LLC, Mountain View, CA 94043 (US)
(72) Inventor: WU, Chih-Hsiang, 10548 Taipei (TW); LIOU, Jia-Hong, 10548 Taipei (TW); ZHANG, Yushu, Beijing, 100190 (CN)
(74) Representative: Marks & Clerk GST

(57) **Abstract**

This disclosure provides systems, devices, apparatus, and methods, including computer programs encoded on storage media, for user equipment (UE)-assisted time domain beam prediction. A UE (102) receives (316), from a network entity (304), beam indication signaling indicating a candidate beam predicted to provide an improved beam quality over a current beam quality of a current serving beam. The UE (102) measures (320) a first beam quality of the current serving beam and a second beam quality of the candidate beam; transmits (322), to the network entity (304), a beam quality report comprising at least one of the first beam quality of the current serving beam or the second beam quality of the candidate beam; and communicates (326/328) with the network entity (304) over at least one of: the candidate beam or the current serving beam based on whether the second beam quality is greater than the first beam quality by a threshold.

## Description

### TECHNICAL FIELD

The present disclosure relates generally to wireless communication, and more particularly, to activation of predicted beams based on user equipment (UE) assistance.

### BACKGROUND

The Third Generation Partnership Project (3GPP) specifies a radio interface referred to as fifth generation (5G) new radio (NR) (5G NR). An architecture for a 5G NR wireless communication system can include a 5G core (5GC) network, a 5G radio access network (5G-RAN), a user equipment (UE), etc. The 5G NR architecture might provide increased data rates, decreased latency, and/or increased capacity compared to other types of wireless communication systems.

Wireless communication systems, in general, may be configured to provide various telecommunication services (e.g., telephony, video, data, messaging, broadcasts, etc.) based on multiple-access technologies, such as orthogonal frequency division multiple access (OFDMA) technologies, that support communication with multiple UEs. As mobile broadband technologies evolve, improvements in mobile broadband have been useful to continue the progression of such technologies. For example, if a beam quality for a beam of a beam pair between a UE and a network entity degrades, the network entity may determine to update the beam of the beam pair to a different beam having an improved beam quality.

### BRIEF SUMMARY

The following presents a simplified summary of one or more aspects in order to provide a basic understanding of such aspects. This summary is not an extensive overview of all contemplated aspects. This summary neither identifies key or critical elements of all aspects nor delineates the scope of any or all aspects. Its sole purpose is to present some concepts of one or more aspects in a simplified form as a prelude to the more detailed description that is presented later.

A user equipment (UE) and a network entity, such as a base station, may perform an analog beamforming operation to increase a link budget between the UE and the network entity. The UE and the network entity may each support a plurality of beams. The UE and the network entity each select an individual beam, from their respective set of beams, for forming a beam pair between the UE and the network entity. A beam pair that provides increased signal strength can reduce a coupling loss between the UE and the network entity and provide an increased coverage gain. Hence, the UE and the network entity perform beam selection procedures based on beam measurement/reporting operations, as well as beam indication techniques, to select beams for the beam pair that provide the increased signal strength.

Beam indication techniques may include the network entity performing a beam prediction to predict/select an update communication beam that might have an improved beam quality compared to a beam quality of a current serving beam. For example, the network entity may predict/select the updated communication beam based on historical observations. However, such predictions may have limited accuracy in non-steady-state conditions, such as when abrupt beam changes occur due to UE rotations, translations, and/or antenna blockages. Accordingly, the UE may perform beam quality measurements on the predicted beam and the current serving beam to verify, based on a comparison of the beam quality measurements, whether the beam quality of the predicted beam is, in fact, better than the beam quality of the current serving beam.

According to some aspects, a UE receives, from a network entity such as a base station, beam indication signaling indicative of one or more candidate beams predicted to provide an improved beam quality over a current beam quality of one or more current serving beams. An activation of the one or more candidate beams occurs after a beam activation delay time. The UE measures a first beam quality of the one or more current serving beams and a second beam quality of the one or more candidate beams and communicates with the network entity over at least one of: the one or more candidate beams or the one or more current serving beams based on whether the second beam quality is greater than the first beam quality.

According to some aspects, a network entity selects one or more candidate beams for communication with a UE based on a prediction that the one or more candidate beams provide an improved beam quality over a current beam quality of one or more current serving beams. An activation of the one or more candidate beams occurs after a beam activation delay time. The network entity transmits, to the UE based on the prediction for the one or more candidate beams, beam indication signaling indicating the one or more candidate beams predicted to provide the improved beam quality. The network entity communicates with the UE over at least one of: the one or more candidate beams or the one or more current serving beams based on whether a first measurement of the one or more candidate beams and a second measurement of the one or more current serving beams indicates that the one or more candidate beams provide the improved beam quality over the current beam quality of the one or more current serving beams.

To the accomplishment of the foregoing and related ends, the one or more aspects correspond to the features hereinafter described and particularly pointed out in the claims. The one or more aspects may be implemented through any of an apparatus, a method, a means for performing the method, and/or a non-transitory computer-readable medium. The following description and the drawings set forth in detail certain illustrative features of the one or more aspects. These features are indicative, however, of but a few of the various ways in which the principles of various aspects may be employed.

### BRIEF DESCRIPTION OF THE DRAWINGS

FIG. 1 illustrates a diagram of a wireless communications system including a plurality of network entities in communication over a plurality of cells.
FIG. 2A is a timing diagram that illustrates a transmission configuration indicator (TCI) update procedure based on TCI signaling between a user equipment (UE) and a network entity (e.g., base station).
FIG. 2B is a timing diagram that illustrates a beam selection procedure for a beam pair between the UE and the base station based on artificial intelligence/machine learning (AI/ML).
FIG. 2C is a timing diagram that illustrates a TCI signaling procedure associated with out-of-order beam activation times.
FIG. 3A illustrates a signaling diagram for time domain communications, at a beam activation time, based on a beam prediction procedure with UE-assisted information.
FIG. 3B illustrates a signaling diagram for time domain communications, at a beam activation time, based on a beam prediction procedure with a beam activation indication.
FIG. 3C illustrates a signaling diagram for time domain communications, at a time before a beam validity duration expires, based on a beam prediction procedure with UE-assisted information.
FIG. 3D illustrates a signaling diagram for time domain communications, at a time before a beam validity duration expires, based on a beam prediction procedure with a beam activation indication.
FIG. 4A illustrates a TCI state activation/indication for time domain beam prediction based on a medium access control-control element (MAC-CE) indication.
FIGs. 4B-4C illustrate a spatial relation information update based on MAC-CE indications.
FIG. 5 is a flowchart of a method of wireless communication at a UE.
FIG. 6 is a flowchart of a method of wireless communication at a network entity.
FIG. 7 is a diagram illustrating an example of a hardware implementation for an example UE apparatus.
FIG. 8 is a diagram illustrating an example of a hardware implementation for one or more example network entities.

### DETAILED DESCRIPTION

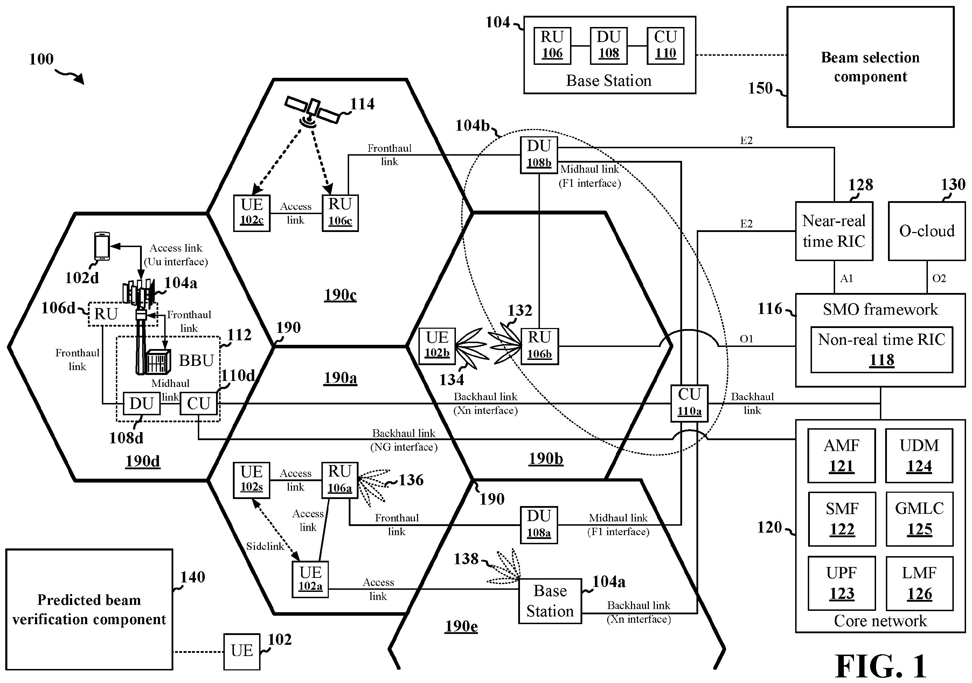

FIG. 1 illustrates a diagram 100 of a wireless communications system associated with a plurality of cells 190. The wireless communications system includes user equipments (UEs) 102 and base stations 104, where some base stations 104a include an aggregated base station architecture and other base stations 104b include a disaggregated base station architecture. The aggregated base station architecture includes a radio unit (RU) 106, a distributed unit (DU) 108, and a centralized unit (CU) 110 that are configured to utilize a radio protocol stack that is physically or logically integrated within a single radio access network (RAN) node. A disaggregated base station architecture utilizes a protocol stack that is physically or logically distributed among two or more units (e.g., RUs 106, DUs 108, CUs 110). For example, a CU 110 is implemented within a RAN node, and one or more DUs 108 may be co-located with the CU 110, or alternatively, may be geographically or virtually distributed throughout one or multiple other RAN nodes. The DUs 108 may be implemented to communicate with one or more RUs 106. Each of the RU 106, the DU 108 and the CU 110 can be implemented as virtual units, such as a virtual radio unit (VRU), a virtual distributed unit (VDU), or a virtual central unit (VCU).

Operations of the base stations 104 and/or network designs may be based on aggregation characteristics of base station functionality. For example, disaggregated base station architectures are utilized in an integrated access backhaul (IAB) network, an open-radio access network (O-RAN) network, or a virtualized radio access network (vRAN) which may also be referred to a cloud radio access network (C-RAN). Disaggregation may include distributing functionality across the two or more units at various physical locations, as well as distributing functionality for at least one unit virtually, which can enable flexibility in network designs. The various units of the disaggregated base station architecture, or the disaggregated RAN architecture, can be configured for wired or wireless communication with at least one other unit. For example, the CU 110a communicates with the DUs 108a-108b via respective midhaul links based on F1 interfaces. The DUs 108a-108b may respectively communicate with the RU 106a and the RUs 106b-106c via respective fronthaul links. The RUs 106a-106c may communicate with respective UEs 102a-102c and 102s via one or more radio frequency (RF) access links based on a Uu interface. In examples, multiple RUs 106 and/or base stations 104 may simultaneously serve the UEs 102, such as the UE 102a of the cell 190a that the access links for the RU 106a of the cell 190a and the base station 104a of the cell 190e simultaneously serve.

One or more CUs 110, such as the CU 110a or the CU 110d, may communicate directly with a core network 120 via a backhaul link. For example, the CU 110d communicates with the core network 120 over a backhaul link based on a next generation (NG) interface. The one or more CUs 110 may also communicate indirectly with the core network 120 through one or more disaggregated base station units, such as a near-real time RAN intelligent controller (RIC) 128 via an E2 link and a service management and orchestration (SMO) framework 116, which may be associated with a non-real time RIC 118. The near-real time RIC 128 might communicate with the SMO framework 116 and/or the non-real time RIC 118 via an A1 link. The SMO framework 116 and/or the non-real time RIC 118 might also communicate with an open cloud (O-cloud) 130 via an O2 link. The one or more CUs 110 may further communicate with each other over a backhaul link based on an Xn interface. For example, the CU 110d of the base station 104a communicates with the CU 110a of the base station 104b over the backhaul link based on the Xn interface. Similarly, the base station 104a of the cell 190e may communicate with the CU 110a of the base station 104b over a backhaul link based on the Xn interface.

The RUs 106, the DUs 108, and the CUs 110, as well as the near-real time RIC 128, the non-real time RIC 118, and/or the SMO framework 116, may include (or may be coupled to) one or more interfaces configured to transmit or receive information/signals via a wired or wireless transmission medium. A base station 104 or any of the one or more disaggregated base station units can be configured to communicate with one or more other base stations 104 or one or more other disaggregated base station units via the wired or wireless transmission medium. In examples, a processor, a memory, and/or a controller associated with executable instructions for the interfaces can be configured to provide communication between the base stations 104 and/or the one or more disaggregated base station units via the wired or wireless transmission medium. For example, a wired interface can be configured to transmit or receive the information/signals over a wired transmission medium, such as for the fronthaul link between the RU 106d and the baseband unit (BBU) 112 of the cell 190d or, more specifically, the fronthaul link between the RU 106d and DU 108d. The BBU 112 includes the DU 108d and a CU 110d, which may also have a wired interface configured between the DU 108d and the CU 110d to transmit or receive the information/signals between the DU 108d and the CU 110d based on a midhaul link. In further examples, a wireless interface, which may include a receiver, a transmitter, or a transceiver (such as an RF transceiver), can be configured to transmit or receive the information/signals via the wireless transmission medium, such as for information communicated between the RU 106a of the cell 190a and the base station 104a of the cell 190e via cross-cell communication beams of the RU 106a and the base station 104a.

One or more higher layer control functions, such as function related to radio resource control (RRC), packet data convergence protocol (PDCP), service data adaptation protocol (SDAP), and the like, may be hosted at the CU 110. Each control function may be associated with an interface for communicating signals based on one or more other control functions hosted at the CU 110. User plane functionality such as central unit-user plane (CU-UP) functionality, control plane functionality such as central unit-control plane (CU-CP) functionality, or a combination thereof may be implemented based on the CU 110. For example, the CU 110 can include a logical split between one or more CU-UP procedures and/or one or more CU-CP procedures. The CU-UP functionality may be based on bidirectional communication with the CU-CP functionality via an interface, such as an E1 interface (not shown), when implemented in an O-RAN configuration.

The CU 110 may communicate with the DU 108 for network control and signaling. The DU 108 is a logical unit of the base station 104 configured to perform one or more base station functionalities. For example, the DU 108 can control the operations of one or more RUs 106. One or more of a radio link control (RLC) layer, a medium access control (MAC) layer, or one or more higher physical (PHY) layers, such as forward error correction (FEC) modules for encoding/decoding, scrambling, modulation/demodulation, or the like can be hosted at the DU 108. The DU 108 may host such functionalities based on a functional split of the DU 108. The DU 108 may similarly host one or more lower PHY layers, where each lower layer or module may be implemented based on an interface for communications with other layers and modules hosted at the DU 108, or based on control functions hosted at the CU 110.

The RUs 106 may be configured to implement lower layer functionality. For example, the RU 106 is controlled by the DU 108 and may correspond to a logical node that hosts RF processing functions, or lower layer PHY functionality, such as execution of fast Fourier transform (FFT), inverse FFT (iFFT), digital beamforming, physical random access channel (PRACH) extraction and filtering, etc. The functionality of the RUs 106 may be based on the functional split, such as a functional split of lower layers.

The RUs 106 may transmit or receive over-the-air (OTA) communication with one or more UEs 102. For example, the RU 106b of the cell 190b communicates with the UE 102b of the cell 190b via a first set of communication beams 132 of the RU 106b and a second set of communication beams 134 of the UE 102b, which may correspond to inter-cell communication beams or cross-cell communication beams. Both real-time and non-real-time features of control plane and user plane communications of the RUs 106 can be controlled by associated DUs 108. Accordingly, the DUs 108 and the CUs 110 can be utilized in a cloud-based RAN architecture, such as a vRAN architecture, whereas the SMO framework 116 can be utilized to support non-virtualized and virtualized RAN network elements. For non-virtualized network elements, the SMO framework 116 may support deployment of dedicated physical resources for RAN coverage, where the dedicated physical resources may be managed through an operations and maintenance interface, such as an O1 interface. For virtualized network elements, the SMO Framework 116 may interact with a cloud computing platform, such as the O-cloud 130 via the O2 link (e.g., cloud computing platform interface), to manage the network elements. Virtualized network elements can include, but are not limited to, RUs 106, DUs 108, CUs 110, near-real time RICs 128, etc.

The SMO framework 116 may be configured to utilize an O1 link to communicate directly with one or more RUs 106. The non-real time RIC 118 of the SMO framework 116 may also be configured to support functionalities of the SMO framework 116. For example, the non-real time RIC 118 implements logical functionality that enables control of non-real time RAN features and resources, features/applications of the near-real time RIC 128, and/or artificial intelligence/machine learning (AI/ML) procedures. The non-real time RIC 118 may communicate with (or be coupled to) the near-real time RIC 128, such as through the A1 interface. The near-real time RIC 128 may implement logical functionality that enables control of near-real time RAN features and resources based on data collection and interactions over an E2 interface, such as the E2 interfaces between the near-real time RIC 128 and the CU 110a and the DU 108b.

The non-real time RIC 118 may receive parameters or other information from external servers to generate AI/ML models for deployment in the near-real time RIC 128. For example, the non-real time RIC 118 receives the parameters or other information from the O-cloud 130 via the O2 link for deployment of the AI/ML models to the real-time RIC 128 via the A1 link. The near-real time RIC 128 may utilize the parameters and/or other information received from the non-real time RIC 118 or the SMO framework 116 via the A1 link to perform near-real time functionalities. The near-real time RIC 128 and the non-real time RIC 115 may be configured to adjust a performance of the RAN. For example, the non-real time RIC 116 monitors patterns and long-term trends to increase the performance of the RAN. The non-real time RIC 116 may also deploy AI/ML models for implementing corrective actions through the SMO framework 116, such as initiating a reconfiguration of the O1 link or indicating management procedures for the A1 link.

Any combination of the RU 106, the DU 108, and the CU 110, or reference thereto individually, may correspond to a base station 104. Hence, the base station 104 may include at least one of the RU 106, the DU 108, or the CU 110. The base stations 104 provide the UEs 102 with access to the core network 120. That is, the base stations 104 might relay communications between the UEs 102 and the core network 120. The base stations 104 may be associated with macrocells for high-power cellular base stations and/or small cells for low-power cellular base stations. For example, the cell 190e corresponds to a macrocell, whereas the cells 190a-190d may correspond to small cells. Small cells include femtocells, picocells, microcells, etc. A cell structure that includes at least one macrocell and at least one small cell may be referred to as a "heterogeneous network."

Transmissions from a UE 102 to a base station 104/RU 106 are referred to uplink (UL) transmissions, whereas transmissions from the base station 104/RU 106 to the UE 102 are referred to as downlink (DL) transmissions. Uplink transmissions may also be referred to as reverse link transmissions and downlink transmissions may also be referred to as forward link transmissions. For example, the RU 106d utilizes antennas of the base station 104a of cell 190d to transmit a downlink/forward link communication to the UE 102d or receive an uplink/reverse link communication from the UE 102d based on the Uu interface associated with the access link between the UE 102d and the base station 104a/RU 106d.

Communication links between the UEs 102 and the base stations 104/RUs 106 may be based on multiple-input and multiple-output (MIMO) antenna technology, including spatial multiplexing, beamforming, and/or transmit diversity. The communication links may be associated with one or more carriers. The UEs 102 and the base stations 104/RUs 106 may utilize a spectrum bandwidth of *Y* MHz (e.g., 5, 10, 15, 20, 100, 400, etc. MHz) per carrier allocated in a carrier aggregation of up to a total of *Yx* MHz, where *x* component carriers (CCs) are used for communication in each of the uplink and downlink directions. The carriers may or may not be adjacent to each other along a frequency spectrum. In examples, uplink and downlink carriers may be allocated in an asymmetric manner, more or fewer carriers may be allocated to either the uplink or the downlink. A primary component carrier and one or more secondary component carriers may be included in the component carriers. The primary component carrier may be associated with a primary cell (PCell) and a secondary component carrier may be associated with as a secondary cell (SCell).

Some UEs 102, such as the UEs 102a and 102s, may perform device-to-device (D2D) communications over sidelink. For example, a sidelink communication/D2D link utilizes a spectrum for a wireless wide area network (WWAN) associated with uplink and downlink communications. The sidelink communication/D2D link may also use one or more sidelink channels, such as a physical sidelink broadcast channel (PSBCH), a physical sidelink discovery channel (PSDCH), a physical sidelink shared channel (PSSCH), and/or a physical sidelink control channel (PSCCH), to communicate information between UEs 102a and 102s. Such sidelink/D2D communication may be performed through various wireless communications systems, such as wireless fidelity (Wi-Fi) systems, Bluetooth systems, Long Term Evolution (LTE) systems, New Radio (NR) systems, etc.

The electromagnetic spectrum is often subdivided into different classes, bands, channels, etc., based on different frequencies/wavelengths associated with the electromagnetic spectrum. Fifth-generation (5G) NR is generally associated with two operating bands referred to as frequency range 1 (FR1) and frequency range 2 (FR2). FR1 ranges from 410 MHz - 7.125 GHz and FR2 ranges from 24.25 GHz - 52.6 GHz. Although a portion of FR1 is actually greater than 6 GHz, FR1 is often referred to as the "sub-6 GHz" band. In contrast, FR2 is often referred to as the "millimeter wave" (mmW) band. FR2 is different from, but a near subset of, the "extremely high frequency" (EHF) band, which ranges from 30 GHz - 300 GHz and is sometimes also referred to as a "millimeter wave" band. Frequencies between FR1 and FR2 are often referred to as "mid-band" frequencies. The operating band for the mid-band frequencies may be referred to as frequency range 3 (FR3), which ranges 7.125 GHz - 24.25 GHz. Frequency bands within FR3 may include characteristics of FR1 and/or FR2. Hence, features of FR1 and/or FR2 may be extended into the mid-band frequencies. Higher operating bands have been identified to extend 5G NR communications above 52.6 GHz associated with the upper limit of FR2. Three of these higher operating bands include FR2-2, which ranges from 52.6 GHz - 71 GHz, FR4, which ranges from 71 GHz - 114.25 GHz, and FR5, which ranges from 114.25 GHz - 300 GHz. The upper limit of FR5 corresponds to the upper limit of the EHF band. Thus, unless otherwise specifically stated herein, the term "sub-6 GHz" may refer to frequencies that are less than 6 GHz, within FR1, or may include the mid-band frequencies. Further, unless otherwise specifically stated herein, the term "millimeter wave", or mmW, refers to frequencies that may include the mid-band frequencies, may be within FR2, FR4, FR2-2, and/or FR5, or may be within the EHF band.

The UEs 102 and the base stations 104/RUs 106 may each include a plurality of antennas. The plurality of antennas may correspond to antenna elements, antenna panels, and/or antenna arrays that may facilitate beamforming operations. For example, the RU 106b transmits a downlink beamformed signal based on a first set of beams 132 to the UE 102b in one or more transmit directions of the RU 106b. The UE 102b may receive the downlink beamformed signal based on a second set of beams 134 from the RU 106b in one or more receive directions of the UE 102b. In a further example, the UE 102b may also transmit an uplink beamformed signal to the RU 106b based on the second set of beams 134 in one or more transmit directions of the UE 102b. The RU 106b may receive the uplink beamformed signal from the UE 102b in one or more receive directions of the RU 106b. The UE 102b may perform beam training to determine the best receive and transmit directions for the beam formed signals. The transmit and receive directions for the UEs 102 and the base stations 104/RUs 106 might or might not be the same. In further examples, beamformed signals may be communicated between a first base station 104a and a second base station 104b. For instance, the RU 106a of cell 190a may transmit a beamformed signal based on an RU beam set 136 to the base station 104a of cell 190e in one or more transmit directions of the RU 106a. The base station 104a of the cell 190e may receive the beamformed signal from the RU 106a based on a base station beam set 138 in one or more receive directions of the base station 104a. Similarly, the base station 104a of the cell 190e may transmit a beamformed signal to the RU 106a based on the base station beam set 138 in one or more transmit directions of the base station 104a. The RU 106a may receive the beamformed signal from the base station 104a of the cell 190e based on the RU beam set 136 in one or more receive directions of the RU 106a.

The base station 104 may include and/or be referred to as a next generation evolved Node B (ng-eNB), a generation NB (gNB), an evolved NB (eNB), an access point, a base transceiver station, a radio base station, a radio transceiver, a transceiver function, a basic service set (BSS), an extended service set (ESS), a transmit reception point (TRP), a network node, a network entity, network equipment, or other related terminology. The base station 104 or an entity at the base station 104 can be implemented as an IAB node, a relay node, a sidelink node, an aggregated (monolithic) base station with an RU 106 and a BBU that includes a DU 108 and a CU 110, or as a disaggregated base station 104b including one or more of the RU 106, the DU 108, and/or the CU 110. A set of aggregated or disaggregated base stations 104a-104b may be referred to as a next generation-radio access network (NG-RAN).

The core network 120 may include an Access and Mobility Management Function (AMF) 121, a Session Management Function (SMF) 122, a User Plane Function (UPF) 123, a Unified Data Management (UDM) 124, a Gateway Mobile Location Center (GMLC) 125, and/or a Location Management Function (LMF) 126. The core network 120 may also include one or more location servers, which may include the GMLC 125 and the LMF 126, as well as other functional entities. For example, the one or more location servers include one or more location/positioning servers, which may include the GMLC 125 and the LMF 126 in addition to one or more of a position determination entity (PDE), a serving mobile location center (SMLC), a mobile positioning center (MPC), or the like.

The AMF 121 is the control node that processes the signaling between the UEs 102 and the core network 120. The AMF 121 supports registration management, connection management, mobility management, and other functions. The SMF 122 supports session management and other functions. The UPF 123 supports packet routing, packet forwarding, and other functions. The UDM 124 supports the generation of authentication and key agreement (AKA) credentials, user identification handling, access authorization, and subscription management. The GMLC 125 provides an interface for clients/applications (e.g., emergency services) for accessing UE positioning information. The LMF 126 receives measurements and assistance information from the NG-RAN and the UEs 102 via the AMF 121 to compute the position of the UEs 102. The NG-RAN may utilize one or more positioning methods in order to determine the position of the UEs 102. Positioning the UEs 102 may involve signal measurements, a position estimate, and an optional velocity computation based on the measurements. The signal measurements may be made by the UEs 102 and/or the serving base stations 104/RUs 106.

Communicated signals may also be based on one or more of a satellite positioning system (SPS) 114, such as signals measured for positioning. In an example, the SPS 114 of the cell 190c may be in communication with one or more UEs 102, such as the UE 102c, and one or more base stations 104/RUs 106, such as the RU 106c. The SPS 114 may correspond to one or more of a Global Navigation Satellite System (GNSS), a global position system (GPS), a non-terrestrial network (NTN), or other satellite position/location system. The SPS 114 may be associated with LTE signals, NR signals (e.g., based on round trip time (RTT) and/or multi-RTT), wireless local area network (WLAN) signals, a terrestrial beacon system (TBS), sensor-based information, NR enhanced cell ID (NR E-CID) techniques, downlink angle-of-departure (DL-AoD), downlink time difference of arrival (DL-TDOA), uplink time difference of arrival (UL-TDOA), uplink angle-of-arrival (UL-AoA), and/or other systems, signals, or sensors.

The UEs 102 may be configured as a cellular phone, a smart phone, a session initiation protocol (SIP) phone, a laptop, a personal digital assistant (PDA), a satellite radio, a GPS, a multimedia device, a video device, a digital audio player (e.g., moving picture experts group (MPEG) audio layer-3 (MP3) player), a camera, a game console, a tablet, a smart device, a wearable device, a vehicle, an utility meter, a gas pump, appliances, a healthcare device, a sensor/actuator, a display, or any other device of similar functionality. Some of the UEs 102 may be referred to as Internet of Things (IoT) devices, such as parking meters, gas pumps, appliances, vehicles, healthcare equipment, etc. The UE 102 may also be referred to as a station (STA), a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a mobile client, a client, or other similar terminology. The term UE may also apply to a roadside unit (RSU), which may communicate with other RSU UEs, non-RSU UEs, a base station 104, and/or an entity at a base station 104, such as an RU 106.

Still referring to FIG. 1, in certain aspects, the UE 102 may include a predicted beam verification component 140 configured to receive, from a network entity, beam indication signaling indicative of one or more candidate beams predicted to provide an improved beam quality over a current beam quality of one or more current serving beams after a beam activation delay time. An activation of the one or more candidate beams occurs after a beam activation delay time. The predicted beam verification component 140 is further configured to measure a first beam quality of the one or more current serving beams and a second beam quality of the one or more candidate beams and communicate with the network entity over at least one of: the one or more candidate beams or the one or more current serving beams based on whether the second beam quality is greater than the first beam quality.

In certain aspects, the base station 104 or a network entity of the base station 104 may include a beam selection component 150 configured to select one or more candidate beams for communication with a UE based on a prediction that the one or more candidate beams provide an improved beam quality over a current beam quality of one or more current serving beams. An activation of the one or more candidate beams occurs after a beam activation delay time. The beam selection component 150 is further configured to transmit, to the UE based on the prediction for the one or more candidate beams, beam indication signaling indicating the one or more candidate beams predicted to provide the improved beam quality. The beam selection component 150 is further configured to communicate with the UE over at least one of: the one or more candidate beams or the one or more current serving beams based on whether a first measurement of the one or more candidate beams and a second measurement of the one or more current serving beams indicates that the one or more candidate beams provide the improved beam quality over the current beam quality of the one or more current serving beams.

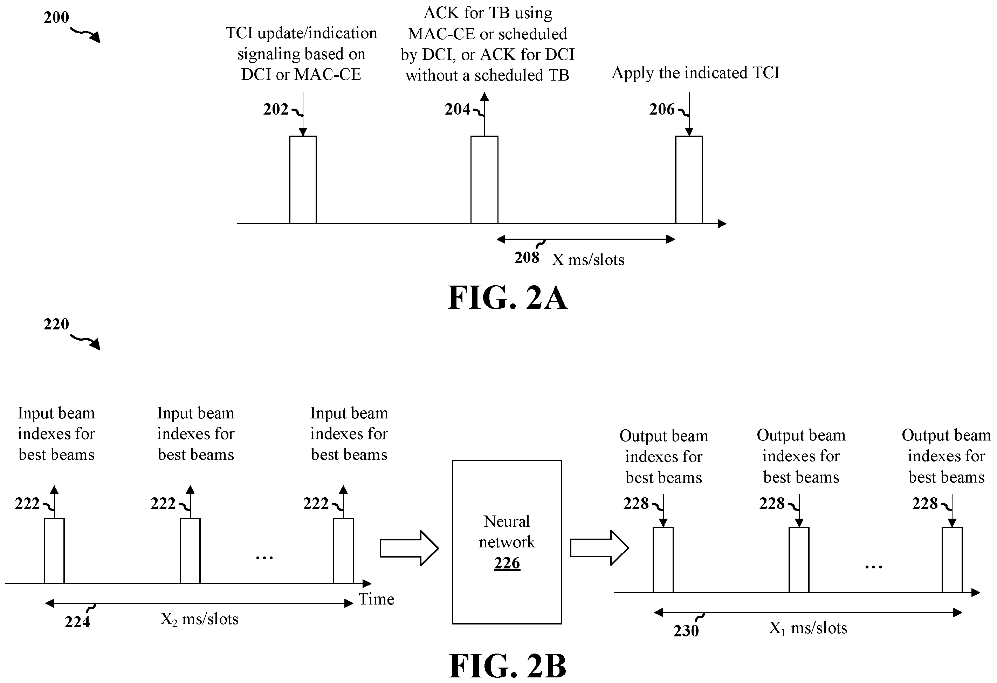

Although the following description may be focused on 5G NR, the concepts described herein may be applicable to other similar areas, such as 5G-Advanced and future versions, LTE, LTE-advanced (LTE-A), and other wireless technologies. The wireless communications system of FIG. 1 may be used to implement aspects of the timing diagrams 200-240 illustrated in FIGs. 2A-2C as well as aspects of the subsequent figures.

FIG. 2A is a timing diagram 200 that illustrates a transmission configuration indicator (TCI) update procedure based on TCI signaling between a UE 102 and a base station 104 or an entity of the base station 104 (e.g., the RU 106). A cell radius/coverage area of the base station 104/RU 106 might be based on a link budget. The "link budget" refers to an accumulation of total gains and losses in a system, which provide an overall received power level at a receiver, such as the UE 102. The receiver may compare the received power level to a receiver sensitivity to determine whether a channel provides at least a minimum signal strength for signals communicated between the receiver and a transmitter (e.g., the UE 102 and the base station 104).

In order to increase the link budget, the base station 104 and the UE 102 might perform an analog beamforming operation to activate a beam pair associated with an increased signal strength. Both the base station 104 and the UE 102 can support a plurality of beams that may be used for the beam pair. A beam pair that decreases a coupling loss might result in an increased coverage gain for the base station 104 and the UE 102. "Coupling loss" refers to a path loss/reduction in power density between a first antenna of the base station 104 and a second antenna of the UE 102, and may be indicated in units of decibel (dB).

A beam selection procedure for the beam pair activated by the base station 104 and the UE 102 might include the UE 102 performing a beam measurement and reporting procedure, followed by the base station 104 performing a beam indication procedure. The beam measurement and reporting procedure might be based on the UE 102 measuring a plurality of downlink reference signals (e.g. synchronization signal block (SSB) and/or channel state information-reference signal (CSI-RS)), where different beams of the base station 104 can be associated with different signals. For example, the UE 102 might perform a beam sweeping operation to measure signal strength and/or interference of reference signals (e.g., SSB/CSI-RS) at different time instances/different symbols associated with the downlink reference signal and report the measurement results. The beam indication procedure might include the base station 104 indicating a TCI state to the UE 102 based on a beam report received from the UE 102. "TCI state" refers to a set of parameters for configuring a quasi co-location (QCL) relationship between one or more downlink reference signals and corresponding antenna ports. For example, the TCI state can be indicative of a QCL relationship between downlink reference signals in a CSI-RS set and physical downlink shared channel (PDSCH) demodulation reference signal (DMRS) ports. Due to the theorem of antenna reciprocity, a single TCI state might provide beam indications for both downlink channels/signals and uplink channels/signals. Based on the TCI state, the base station 104 can transmit one or more downlink reference signals (e.g. SSB/CSI-RS) for the beam indication procedure.

TCI update/indication signaling may be transmitted 202 via MAC-control element (MAC-CE) or downlink control information (DCI). The base station 104 might indicate separate TCI states for each downlink resource/channel, whereas the base station 104 might indicate separate spatial relation information for each uplink resource/channel. The uplink information may be indicated via RRC or MAC-CE based on similar techniques to the TCI update/indication signaling transmitted 202 for the downlink signaling. The base station 104 can indicate TCI states for multiple downlink/uplink resources/channels using a single MAC-CE or DCI. For TCI update/indication signaling based on MAC-CE or DCI, the UE 102 starts to apply 206 the indicated TCI after X ms/slots 208 from the UE 102 transmitting 204 an acknowledgment (ACK) for a transport block (TB) using the MAC-CE or scheduled by the DCI, or X ms/slots 208 after the UE 102 transmits 204 an ACK for a DCI without a scheduled TB. In an example, X may correspond to X=3ms for TCI update/indication signaling transmitted 202 based on the MAC-CE, or X may be configured via RRC signaling for TCI update/indication signaling transmitted 202 based on the DCI, where X corresponds to the beam activation delay time.

Beam indication techniques associated with TCI signaling may include joint beam indication or separate beam indications. "Joint beam indication" refers to a single/joint TCI state that the base station 104 uses to update the beams for both the downlink channels/signals and the uplink channels/signals. For example, the base station 104 can indicate a single/joint TCI state in downlink TCI signaling that is configured based on a *DLorJointTCIState* parameter to update the beams for both the downlink channels/signals and the uplink channels/signals. For TCI signaling based on the joint TCI state, the base station 104 may transmit the SSB/CSI-RS to indicate the QCL relationship between the downlink channels/signals and the spatial relation of the uplink channels/signals. In a first aspect, the TCI update/indication signaling transmitted 202 by the base station 104 may correspond to a joint beam indication for both the downlink channels/signals and the uplink channels/signals.

"Separate beam indications" refers to a first TCI state that the base station 104 uses to update a first beam for the downlink channels/signals and a second TCI state that the base station 104 uses to update a second beam for the uplink channels/signals. For example, the base station 104 can indicate the first TCI state in the downlink TCI signaling configured based on the *DLorJointTCIState* parameter to update the first beam for the downlink channels/signals, and can indicate the second TCI state in further downlink TCI signaling configured based on an *UL-TCIState* parameter to update the second beam for the uplink channels/signals. If the base station 104 indicates the second TCI state (e.g., uplink TCI) in a downlink reference signal, the downlink reference signal may correspond to the SSB/CSI-RS. In examples where the base station 104 uses an uplink reference signal to indicate the second TCI state, the uplink reference signal may correspond to a sounding reference signal (SRS), which might indicate the spatial relation of the uplink channels/signals. In a second aspect, the TCI update/indication signaling transmitted 202 by the base station 104 may correspond to either the downlink channels/signals or the uplink channels/signals based on the separate beam indications technique.

The base station 104 may configure a QCL type and/or a source reference signal for the QCL signaling. QCL types for downlink reference signals might be based on a higher layer parameter, such a *qcl-Type* in a *QCL-Info* parameter. A first QCL type, typeA, includes values for a Doppler shift, a Doppler spread, an average delay, and a delay spread. A second QCL type, typeB, includes values for the Doppler shift and the Doppler spread. A third QCL type, typeC, includes values for the Doppler shift and the average delay. A fourth QCL type, typeD includes values for a spatial receive (Rx) parameter. The UE 102 may use a same spatial transmission filter to indicate the spatial relation as used to receive the downlink reference signal from the base station 104 or transmit the uplink TCI signaling to the base station 104.

FIG. 2B is a timing diagram 220 that illustrates a beam selection procedure for a beam pair between the UE 102 and the base station 104 based on artificial intelligence/machine learning (AI/ML). "AI/ML" refers to one or more data-driven algorithms that generate a set of outputs based on a set of inputs without being explicitly programmed to generate the set of outputs. For example, AI/ML algorithms might use a data collection process to predict output values based on input values associated with historical data. A data collection process includes network nodes, 106, 108, 110, and others, management entities 121, 122, and others, UEs 102, etc., that collect data for training an AI/ML model, data analytics, inferencing, etc. The AI/ML model corresponds to the data-driven algorithm that applies the AI/ML techniques to generate the set of outputs based on a set of inputs. The AI/ML model is trained by learning input/output relationships of given sets of data, which a trained AI/ML model might use to generate an inference for a set of outputs based on the set of inputs.

An AI/ML model might be implemented to predict one or more improved beams for future communications between the base station 104 and the UE 102 based on one or more beam reports indicative of past beam/condition information. In examples, a neural network 226 associated with the AI/ML model may receive as input, a plurality of input beam indexes 222 associated with past beams/conditions of one or more best reported beams. The plurality of input beam indexes 222 for the one or more best reported beams might correspond to beam information for active beams over a time duration of X₂ ms/slots 224. Based on receiving the plurality of input beam indexes 222 for the one or more best reported beams, the neural network 226 outputs a corresponding set of one or more output beam indexes 228 that the neural network 226 predicts will provide one or more best output beams at a future time (e.g., starting at an activation time and ending when a validity duration expires). The one or more output beam indexes 228 for the one or more predicted output beams might correspond to active beams over a second time duration of X₁ ms/slots 230.

The base station 104 may utilize AI/ML techniques to indicate a TCI state for future beams/conditions based on past beam measurement and reporting information received from the UE 102. However, the neural network 226 may not be able to predict best future beams with a threshold level of accuracy when the future beams are subject to abrupt changes in condition (e.g., based on UE rotations, translations, and/or antenna blockages). Thus, the UE 102 can transmit a report to the base station 104 including UE-assisted information that indicates whether the one or more output beam indexes 228 of the neural network 226 actually experiences a beam quality and/or a link budget that is better than one or more current serving beams.

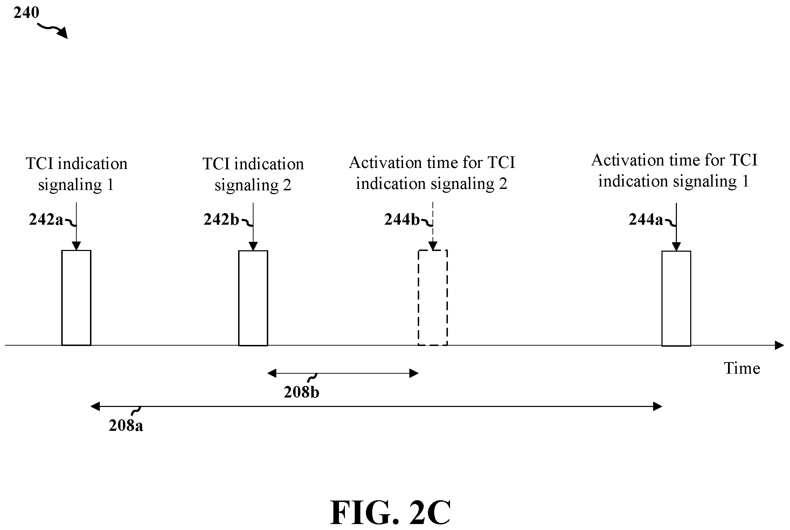

FIG. 2C is a timing diagram 240 that illustrates a TCI signaling procedure associated with out-of-order beam activation times. The base station 104 may transmit DCI to the UE 102 in a manner that implicitly or explicitly indicates whether a second beam indication 242b for the UE 102 "overwrites" (i.e., is to be used in place of) a first beam indication 242a for the UE 102. Initially, the base station 104 indicates 242a the first beam indication to the UE 102 first in time and indicates 242b the second beam indication to the UE 102 second in time.

The base station 104 may use a field in the DCI to indicate explicitly to the UE 102 whether the first beam indication is being overwritten by the second beam indication indicated in an earlier DCI. The first beam associated with the first beam indication and a second beam associated with the second beam indication may correspond to predicted beams of a beam prediction procedure performed at the base station 104. In some examples, reserved values for certain field, such as antenna ports, can be used to provide the indication in the DCI. In further examples, the indication in the DCI may correspond to an index of a starting control channel element (CCE) for a physical downlink control channel (PDCCH). For instance, an odd-numbered index might indicate to the UE 102 that the base station 104 is overwriting a previous beam indication, and an even-numbered index might indicate to the UE 102 that the base station 104 is not overwriting the previous beam indication. The indication in the DCI may also correspond to a search space or a control resource set (CORESET) for the PDCCH. The base station 104 can utilize a TCI in the PDCCH for the search space/CORESET to indicate whether the base station 104 is overwriting the previous beam indication (e.g., based on a search space type, such as a common search space or a UE-specific search space, a search space index, and/or a CORESET index configured based on RRC signaling).

The base station 104 can deactivate the previous beam indication via DCI or MAC-CE. A field included in the MAC-CE indication for TCI state/spatial relation information may indicate whether the base station 104 is deactivating the previous beam indication for one or more corresponding channels. In examples, the base station 104 may use a dedicated TCI state/spatial relation information index to indicate the deactivation of the previous beam indication for the one or more corresponding channels. In further examples, the base station 104 may use a field in the TCI signaling to indicate the deactivation of the previous beam indication.

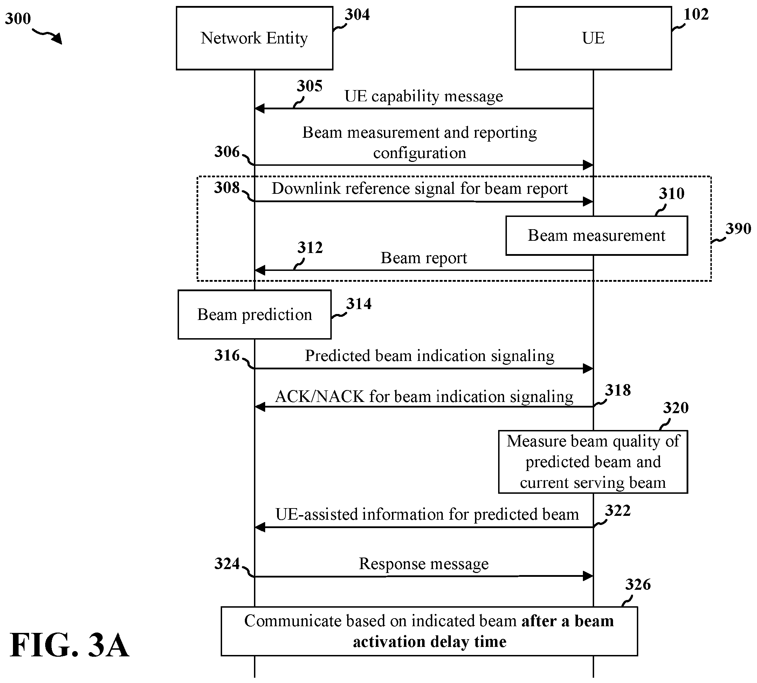

For beam indications based on MAC-CE or DCI, the base station 104 and the UE 102 may determine whether an indicated TCI state in the MAC-CE or the DCI implicitly overwrites the previous beam indication associated with a predicted TCI state based on activation delay times. For example, the UE 102 may receive 242a first TCI indication signaling with a first activation delay time 208a indicator from the base station 104 at a first time instance and may receive 242b second TCI indication signaling with a second activation delay time 208b indicator from the base station 104 at a second time instance. However, the activation delay time 208b for the second TCI indication signaling may be shorter than the activation delay time 208a for the first TCI indication signaling. In this example, the UE overwrites the shorter activation duration 208b which would have caused activation 244b of the second beam associated with the second TCI indication signaling to occur before activation 244a of the first beam associated with the first TCI indication signaling. That is, when activations 244a-244b of the first/second beams are scheduled to occur out-of-order from an order in which the first/second TCI indication signaling is received 242a-242b from the base station 104, then the later activation 244a overrides the earlier, out-of-order activation 244b. Accordingly, when this happens, the UE 102 may determine that the first TCI indication signaling overwrites the second TCI indication signaling and omit activating 244b the second, out-of-order TCI indication signaling. The UE 102 may transmit a UE capability report to the base station 104 to indicate whether the UE 102 supports explicit and/or implicit out-of-order activation times for the TCI indication signaling. FIGs. 2A-2C describe beam indication/selection techniques, whereas as FIGs. 3A-3D describe beam quality verification procedures for an indicated/selected beam.

FIG. 3A illustrates a signaling diagram 300 for time domain communications between a network entity 304 and the UE 102, after a beam activation delay time, based on a beam prediction procedure associated with UE-assisted information. The network entity 304 may correspond to the base station 104 or an entity at the base station 104, such as the RU 106, the DU 108, the CU 110, etc.

The UE 102 transmits 305 a UE capability message to the network entity 304. The UE capability message may indicate whether the UE 102 supports out-of-order activation times for the TCI indication signaling (e.g., skipping 244b), as described with respect to FIG. 2C. In further examples, the UE capability message may indicate whether the UE supports the beam prediction procedure (e.g., via a field in the UE capability message indicting support for UE-assisted information, beam activation delay times, etc.). The network entity 304 transmits 306 a beam measurement and reporting configuration to the UE 102 via RRC signaling. The beam measurement and reporting configuration may configure a first beam measurement and reporting procedure (e.g., 310-312) and/or a second beam measurement and reporting procedure (e.g., 320-322) associated with predicted beam indication signaling. For example, the network entity 304 might transmit at least one first RRC message (e.g., *RRCReconfiguration* message(s)) that configures the UE 102 for the first beam measurement and reporting procedure. The at least one first RRC message may also include one or more RRC parameters that enable reception 316 of the predicted beam indication signaling indicative of a predicted beam from the network entity 304. In further examples, the network entity 304 might transmit a second RRC message (e.g., *RRCReconfiguration* message) that configures/enables the UE 102 for the second beam measurement and reporting procedure associated with the predicted beam indicated in the predicted beam indication signaling.

The network entity 304 transmits 308 one or more downlink reference signals to the UE 102, which may be used by the UE 102 for the first beam measurement and reporting procedure (e.g., 310-312). The one or more downlink reference signals may correspond to one or more SSBs, CSI-RS, etc. The network entity 304 may transmit 308 the one or more downlink reference signals before, during, or after transmission of the at least one first RRC message and/or the second RRC message.

The UE 102 measures 310 the one or more downlink reference signals received 308 from the network entity 304 for performing the first beam measurement and reporting procedure. The measurement 310 may be performed in response to the at least one first RRC message received 306 from the network entity 304. The UE 102 transmits 312 a beam report to the network entity 304 based on the beam measurement. The beam report may indicate one or more beam indexes as well as corresponding beam quality information, such as layer 1 (L1)-reference signal receiving power (RSRP) (L1-RSRP) information and/or L1-signal-to-interference-plus-noise ratio (SINR) (L1-SINR) information. The UE reporting of the beam quality may be activated based on RRC, MAC-CE, or DCI signaling. For example, the network entity 304 might indicate based on the MAC-CE whether a beam report is to be transmitted from the UE 102. In other examples, a field of the DCI may be used to indicate whether the UE 102 is to transmit the beam report to the network entity, or UE reporting may be based on the DCI format, the search space, or CORESET for the DCI. The one or more beam indexes included in the beam report transmitted 312 to the network entity 304 identify at least a subset of the one or more downlink reference signals received 308 from the network entity 304. The network entity 304 may request multiple cycles of reference signal beam reporting 390 on a periodic or aperiodic basis.

The network entity 304 predicts 314, based on a beam prediction procedure, a beam that might be of increased quality over a current serving beam for the UE 102 in the future. The beam prediction may be based on the cycles of beam reports received 312 from the UE 102. The beam prediction may utilize AI/ML techniques. The network entity 304 transmits 316 predicted beam indication signaling to the UE 102 indicative of the beam predicted 314 by the network entity 304. The predicted beam indication signaling can indicate a TCI state and/or spatial relation information to indicate the beam predicted 314 by the network entity 304. The beam indication signaling may also indicate a time that the UE 102 is to activate the beam predicted 314 by the network entity 304, if the beam includes the increased quality over the current serving beam for the UE 102. If the beam indication signaling includes a validity duration for activating the predicted beam that expires before the UE 102 uses the predicted beam, the UE 102 will not activate the predicted beam. If the predicted beam is activated by the UE 102 after the activation time and within the validity duration, the current serving beam is switched to the predicted beam. These two values, activation time 208 and validity duration, time-limit UE usage of a predicted beam.

Responsive to receiving 316 the predicted beam indication signaling, UE 102 transmits 318 first acknowledgment/negative-acknowledgment (ACK/NACK) feedback to the network entity 304. For example, the UE 102 transmits an ACK to the network entity 304 to indicate that the UE 102 has successfully decoded the predicted beam indication signaling. The first ACK/NACK feedback transmitted 318 to the network entity 304 might correspond to hybrid automatic repeat request (HARQ)-ACK (HARQ-ACK). If the UE 102 does not successfully decode the predicted beam indication signaling, the UE 102 transmits 318 a negative-acknowledgement (NACK) to the network entity 304. In such cases, the network entity 304 can retransmit the predicted beam indication signaling to the UE 102, transmit different predicted beam indication signaling to the UE 102, or refrain from further transmissions of predicted beam indication signaling to the UE 102. The network entity 304 can configure a dedicated PUCCH resource for the UE 102 to transmit 318 the first ACK/NACK feedback for the predicted beam indication signaling. The UE 102 may transmit 318 the first ACK/NACK feedback on the PUCCH resource N slots/symbols before the beam activation time of the predicted beam. A value of N may be predefined or configured by the network entity 304 based on higher layer signaling (e.g. an RRC parameter for *PUCCH-config* or *PDSCH-config*). In some examples, the UE 102 transmits 318 the first ACK/NACK feedback on the PUCCH resource based on the first ACK/NACK feedback corresponding to a NACK indication. Thus, if the predicted beam satisfies the beam activation conditions, the UE 102 may activate the predicted beam without transmitting the first ACK/NACK feedback to the network entity 304. When the PUCCH resource overlaps with a PUSCH in time domain, the UE 102 may multiplex transmission of an ACK with other information on the PUSCH. In other examples, the UE 102 may transmit one of either the PUCCH or PUSCH.

Before the validity time expires for activation of the predicted beam, the UE 102 may (e.g., periodically or aperiodically) monitor for whether the predicted beam satisfies an activation condition. For example, the UE 102 can measure 320 a beam quality of the predicted beam and the current serving beam to determine whether the predicted beam satisfies the beam activation condition. If the UE 102 detects that the predicted beam satisfies the activation condition before the validity time expires, the UE 102 may transmit 322 UE-assisted information (e.g., using an RRC message, MAC-CE indication, PUCCH transmission, etc.) to the network entity 304 to indicate that the UE 102 recommends switching to the predicted beam. In examples, the UE 102 may transmit 322 the UE-assisted information for the predicted beam in an uplink beam associated with the current serving beam. The UE 102 may transmit second ACK/NACK feedback in the UE-assisted information for the predicted beam N slots/symbols before the beam activation time of the predicted beam to indicate whether the predicted beam meets the beam activation condition(s). The UE 102 might transmit 322 the UE-assisted information via MAC-CE, such as for transmission of the second NACK. In examples, the MAC-CE for sending 322 UE-assisted information may also be used to indicate one or more of: a serving cell index, a BWP index (e.g., DL BWP/UL BWP index), TCI state/spatial relation information indexes associated with a NACK, a recommended beam, the beam quality for the predicted beam, the current serving beam, or the recommended beam, recommended beam indexes, etc. The UE 102 might request the network entity 304 to schedule a resource for the UE 102 to transmit 322 the UE-assisted information via the MAC-CE. For example, the network entity 304 may configure the resource based on higher layer signaling or based on a contention-based random access (CBRA) procedure.

In some examples, the network entity 304 transmits a command (not shown; occurs after 318) to the UE 102 for the UE 102 to temporarily refrain from performing beam measurement and reporting on beams other than the predicted beam and the serving beams. The command may be indicated by an RRC message (e.g., RRC reconfiguration message), MAC-CE, or DCI. In response to the command, the UE stops and/or refrains from measuring the beam other than the predicted beam and the current serving beam for a configured period of time. In further examples, successful decoding of the predicted beam indication signaling may trigger the UE 102 to stop and/or refrain from measuring the beams other than the predicted beam and the current serving.

After receiving 322 the UE-assisted information for the predicted beam, the network entity 304 may transmit 324 a response message to the UE 102 to indicate an acceptance/configuration for the predicted beam. Alternatively, the network entity 304 may determine that a different beam may provide a better quality than the predicted beam and indicate in the response message transmitted 324 to the UE 102 that the different beam is to be used for communication with the network entity 304. The UE 102 may transmit third ACK/NACK feedback (not shown; occurs after 324; where second ACK/NACK feedback might correspond to the UE-assisted information being an ACK or a NACK) to the network entity 304 to acknowledge (positively or negatively) the response message received 324 from the network entity 304.

The UE 102 can communicate 326 with the network entity 304 based on the indicated beam after the beam activation delay time. For example, the UE 102 may receive downlink transmissions from the network entity 304 on the indicated beam (e.g., the predicted beam or the different beam indicated in the response message) after the beam activation delay time. After the UE 102 activates the indicated beam to communicate 326 with the network entity 304, the UE 102 may stop using the current serving beam for communications with the network entity 304. That is, the UE 102 may switch the current serving beam to the indicated beam. After the network entity 304 starts to use the indicated beam to communicate 326 with the UE 102, the network entity 304 may also stop using the current serving beam for communications with the UE 102.

If the UE 102 detects a beam failure on the indicated beam after switching the current serving beam to the indicated beam, the UE 102 can transmit a request to network entity 304 to switch the serving beam back to the previous serving beam or to a different beam. If the UE 102 detects a beam failure on the current serving beam before the beam activation time, the UE 102 can perform a beam failure recovery (BFR) procedure with the network entity 304 for the current serving beam. The UE 102 may not activate the predicted beam in response to detecting the beam failure or in response to initiating the BFR procedure.

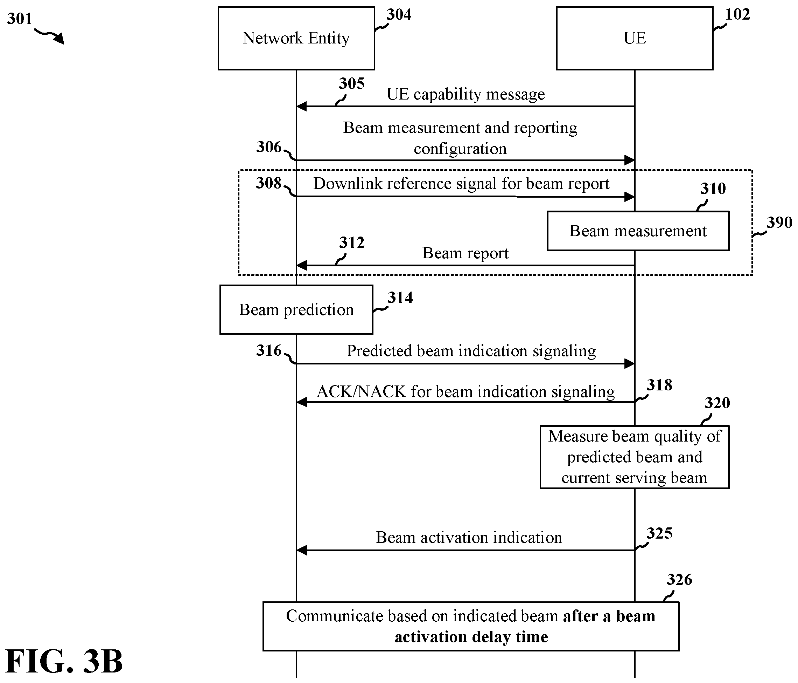

FIG. 3B illustrates a signaling diagram 301 for time domain communications between the network entity 304 and the UE 102, after a beam activation delay time, based on a beam prediction procedure associated with a beam activation indication. Elements 305, 306, 308, 310, 312, 314, 316, 318, 320, and 390 of FIG. 3B have already been described with respect to FIG. 3A. Element 326 has also already been described with respect to FIG. 3A, but not in combination with element 325.

Before the validity timer expires for activation of the predicted beam, the UE 102 may monitor for whether the predicted beam satisfies an activation condition. If the UE 102 detects that the predicted beam satisfies the activation condition before the validity time expires, the UE 102 may transmit 325 a beam activation indication to the network entity 304 to indicate to the network entity 304 that the current serving beam is being switched to the predicted beam. The UE 102 may transmit 325 the beam activation indication via RRC message, MAC-CE, or PUCCH transmission. In examples, the UE 102 transmits 325 the beam activation indication to the network entity 304 before the beam activation time (i.e., UE 102 starts to communicate 326 with the network entity 304 based on the predicted beam X slots after transmitting 325 the beam activation indication). In further examples, the UE 102 transmits 325 the beam activation indication at or after the beam activation time (i.e., the UE 102 starts to communicate 326 with the network entity 304 based on the predicted beam immediately after the beam activation indication transmission). The UE 102 may transmit 325 the beam activation indication to the network entity 325 on an uplink beam that corresponds to the predicted beam. If the UE 102 detects that the predicted beam does not satisfy the activation condition, the UE 102 may continue to communicate with the network entity 304 on the current serving beam.

If the UE 102 switches the current serving beam to the predicted beam, the UE 102 might begin to communicate 326 with the network entity 304 based on the indicated beam (i.e., the predicted beam associated with the beam indication signaling). The UE 102 might communicate 326 with the network entity 304 after the beam activation delay time and without receiving a subsequent indication from the network entity 304, such as the response message 324 of FIG. 3A, to switch the current serving beam to the predicted beam. After the UE 102 activates the predicted beam to communicate 326 with the network entity 304, the UE 102 may stop using the current serving beam for communications with the network entity 304. After the network entity 304 starts to use the predicted beam to communicate 326 with the UE 102, the network entity 304 may also stop using the current serving beam for communications with the UE 102. The network entity 304 may communicate 326 with the UE 102 based on the predicted beam after the beam activation delay time based on receiving 325 the beam activation indication from the UE 102.

In some examples, the UE 102 does not transmit 325 the beam activation indication to the network entity 304 in response to the UE 102 determining to switch the current serving beam to the predicted beam. Instead, if the UE 102 detects that the predicted beam satisfies the activation condition, the UE 102 starts to communicate 326 based on the predicted beam after the beam activation delay time. In other words, there is a time gap between 325 and 326. If the UE 102 detects that the predicted beam does not satisfy the activation condition, the UE 102 may transmit an indication to the network entity 304 on an uplink beam associated to the current serving beam to indicate to the network entity 304 that the predicted beam does not satisfy the activation condition. The network entity 304 may determine whether the UE 102 uses the predicted beam at a later time.

If the UE 102 detects a beam failure on the current serving beam, the UE 102 can transmit 325 (e.g., on the predicted beam) the beam activation indication to the network entity 304 and switch the current serving beam to the predicted beam for communicating with the network entity 304. In further examples, if the UE 102 detects a beam failure on the current serving beam, the UE 102 can perform a BFR procedure with the network entity 304. The UE 102 may not activate the predicted beam in response to detecting the beam failure or in response to initiating the BFR procedure.

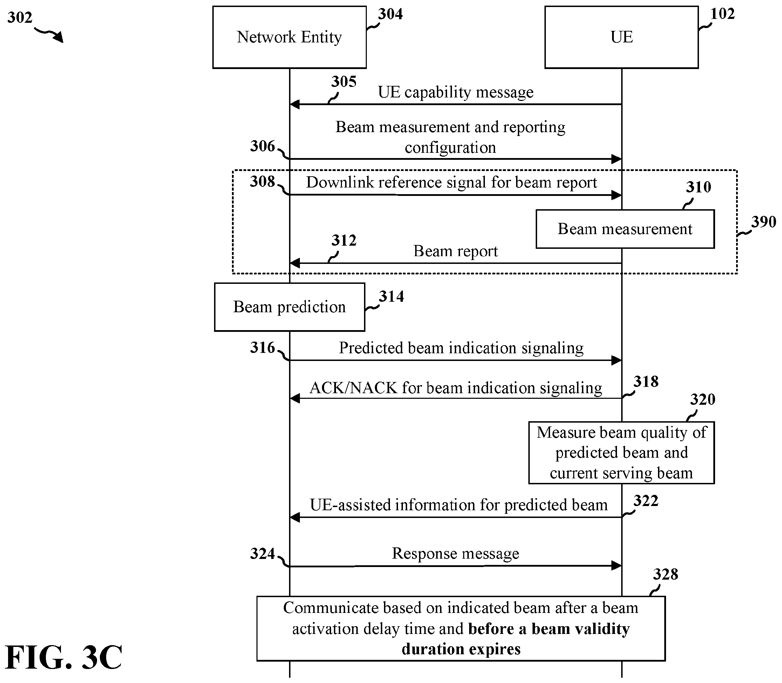

FIG. 3C illustrates a signaling diagram 302 for time domain communications between the network entity 304 and the UE 102, after a beam activation delay time and before a beam validity duration expires, based on a beam prediction procedure associated with UE-assisted information. Elements 305, 306, 308, 310, 312, 314, 316, 318, 320, 322, 324, and 390 of FIG. 3C have already been described with respect to FIG. 3A.

When the network entity 304 transmits 316 the predicted beam indication signaling to the UE 102, the network entity 304 may include/indicate via the predicted beam indication signaling, a beam validity time period/duration for activating the predicted beam. If the beam validity time expires before the UE 102 uses the predicted beam, the UE 102 will not activate the predicted beam.

Before the beam validity expires (e.g., immediately upon receiving 324 the response message from the network entity 304), the UE 102 can communicate 328 with the network entity 304 based on the indicated beam. For example, the UE 102 may receive downlink transmissions from the network entity 304 on the indicated beam (e.g., the predicted beam or the different beam indicated in the response message) before the beam validity duration expires. After the UE 102 activates the indicated beam to communicate 328 with the network entity 304, the UE 102 may stop using the current serving beam for communications with the network entity 304. That is, the UE 102 may switch the current serving beam to the indicated beam. After the network entity 304 starts to use the indicated beam to communicate 328 with the UE 102, the network entity 304 may also stop using the current serving beam for communications with the UE 102.

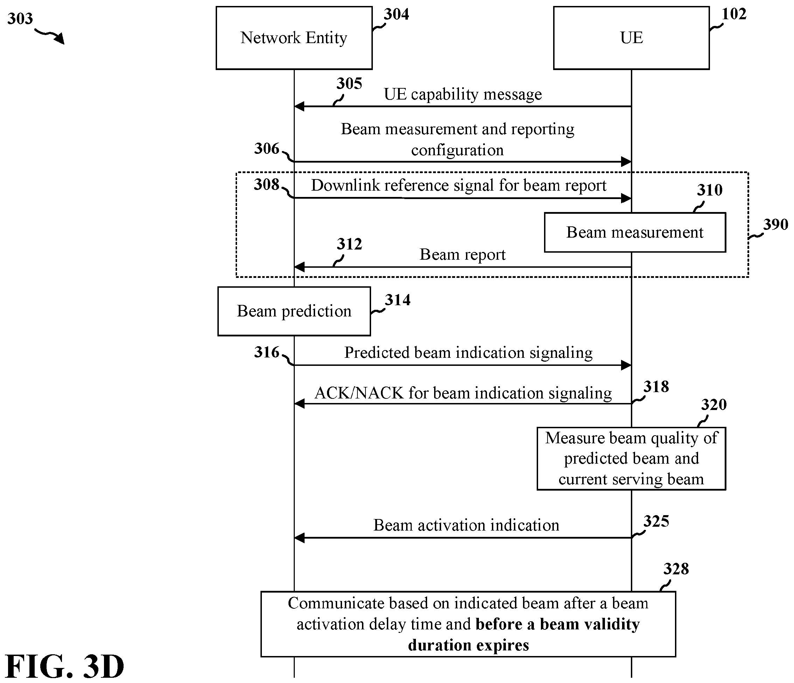

FIG. 3D illustrates a signaling diagram 303 for time domain communications between the network entity 304 and the UE 102, after a beam activation delay time and before a beam validity duration expires, based on a beam prediction procedure associated with a beam activation indication. Elements 305, 306, 308, 310, 312, 314, 316, 318, 320, 390 of FIG. 3D have already been described with respect to FIG. 3A and FIG. 3C. Element 325 has also already been described with respect to FIG. 3B, but not in combination with element 328.

As shown, the UE 102 transmits 325 the beam activation indication to the network entity 304 before the beam validity time expires (e.g., immediately upon detecting that the predicted beam satisfies the activation condition and without receiving a subsequent indication from the network entity 304, such as the response message 324 of FIG. 3C, to switch the current serving beam to the predicted beam). If the UE 102 detects that the predicted beam does not satisfy the activation condition before the beam validity time expires, the UE 102 may continue to communicate with the network entity 304 on the current serving beam.

The UE 102 can communicate 328 with the network entity 304 based on the predicted beam before the beam validity duration expires. After the UE 102 activates the predicted beam to communicate 328 with the network entity 304, the UE 102 may stop using the current serving beam for communications with the network entity 304. That is, the UE 102 may switch the current serving beam to the predicted beam. After the network entity 304 starts to use the predicted beam to communicate 328 with the UE 102, the network entity 304 may also stop using the current serving beam for communications with the UE 102. The network entity 304 may communicate 328 with the UE 102 based on the predicted beam before the beam validity duration expires based on receiving 325 the beam activation indication from the UE 102.

For time domain beam predictions, the network entity 304 may indicate a beam activation delay time for a TCI state, spatial relation information, and/or a pathloss reference signal update. For example, the network entity 304 may indicate the beam activation delay time via MAC-CE or DCI. The UE 102 may apply the beam activation delay time to target channels associated with the indicated/predicted beam. The UE 102 may report 305 a UE capability for a minimum beam activation delay and/or a maximum beam activation delay. In examples, the beam activation delay time may correspond to M symbols based on a subcarrier spacing (SCS) for a downlink bandwidth part (BWP) associated with TCI update/indication signaling or based on a SCS for an uplink BWP associated with the ACK/NACK feedback transmitted 318 for the beam indication signaling. The UE 102 and the network entity 304 may count the beam activation time for the predicted beam after the ACK/NACK feedback transmitted 318 for the beam indication signaling.

If the network entity 304 determines that a previously indicated predicted beam does not provide an improved beam quality over the current serving beam (e.g., based on beam measurement and reporting from the UE 102), the network entity 304 may deactivate or cancel the previously indicated predicted beam. The network entity 304 may utilize RRC signaling to enable the TCI update/indication signaling, which may be configured per search space, per CORESET, per BWP, per serving cell, per serving cell group, per serving cell list, or per UE.

The network entity 304 may configure the beam activation delay time based on the MAC-CE for the TCI state/spatial relation information. The network entity 304 may indicate a list of candidate beam activation delays via RRC signaling, or the list of candidate beam activation delays may be based on a predefined protocol. A field in the MAC-CE may be used to select the beam activation delay for the TCI state/spatial relation information. Alternatively, the network entity 304 may indicate the beam activation delays separately via RRC signaling or a second MAC-CE. In further examples, the network entity 304 may indicate the beam activation delay via DCI and the list of candidate beam activation delays via the RRC signaling, or the list of candidate beam activation delays may be based on a predefined protocol. A field of DCI format 1_1 or DCI format 1_2 may be used to select the beam activation delay for the TCI state/spatial relation information.

The UE 102 may transmit 322 second ACK/NACK feedback corresponding to the UE-assisted information after comparing the beam quality of the predicted beam to the current serving beam. The UE 102 may determine the beam quality based on L1-RSRP information, L1-SINR information, or the coupling loss for downlink reference signals corresponding the TCI state/spatial relation information for the predicted beam and the current serving beam. The UE 102 may determine the coupling loss based on the L1-RSRP/transmission power for the downlink reference signals. In some examples, the network 304 may configure (not shown) a beam quality comparison metric at the UE 102.

The UE 102 may transmit 322 an ACK to the network entity 304 in second ACK/NACK feedback associated with the UE-assisted information, if at least a subset of predicted beam activation conditions is satisfied. Hence, the UE 102 may transmit 318 first ACK/NACK feedback to indicate whether the UE 102 successfully decoded the beam indication signaling; the UE 102 may transmit 322 second ACK/NACK feedback in the UE-assisted information to indicate whether the predicted beam satisfies the predicted beam activation conditions; and the UE 102 may transmit third ACK/NACK feedback (not shown, occurs after 324) to indicate whether the UE 102 received 324 the response message from the network entity 304. One or more thresholds associated with the predicted beam activation conditions may be configured to the UE 102 based on higher layer signaling, or may be based on a predefined protocol. Otherwise, the UE 102 may transmit a NACK to the network entity 304 for the second ACK/NACK feedback. The UE 102 may transmit the ACK for the second ACK/NACK feedback based on at least one of: the beam quality of the current serving beam being below a first threshold, the beam quality of the predicted beam being above a second threshold, or the beam quality of predicted beam being above the beam quality of the current serving beam by a third threshold.

In multi-beam indication examples, where more than one TCI state/spatial relation information is included in the predicted beam indication signaling transmitted 316 to the UE 102, the beam quality may be based on an average beam quality, a minimum beam quality, or a maximum beam quality associated with the multiple beams. In further examples, UE 102 may transmit ACK/NACK feedback for each predicted beam of the multi-beam indication. Thus, if T beams are included in the multi-beam indication signaling, the UE 102 may transmit 322 T ACK/NACKs to the network entity 304 for the T beams.

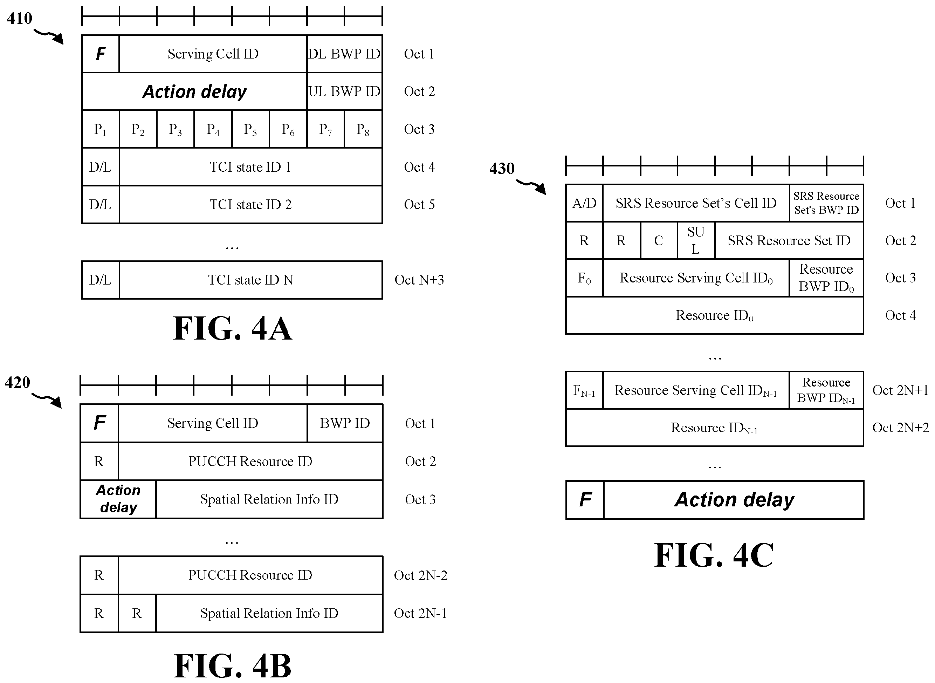

The network entity 304 may request (not shown) a beam quality report of the predicted beam and the current serving beam. The transmitted request may trigger a dedicated *CSI-reportConfig* at the UE 102, where the *CSI-reportConfig* may be configured for a particular beam ID, such that the UE 102 reports the beam quality (e.g. L1-RSRP/L1-SINR) for the predicted beam and the current serving beam instead of the beam quality for a channel measurement resource (CMR). In further examples, the network entity 304 can trigger a *CSI-reportConfig* where a CMR list includes a downlink reference signal QCLed with, or the same as, the downlink reference signal configured for the TCI state to be applied or a current TCI state. The UE 102 may report at least the beam quality for the predicted beam and the current serving beam in a manner similar to transmitting 312 the beam report. In still further examples, the UE 102 can directly report the beam quality for the predicted beam and the current serving beam to the network entity 304 based on a configured PUCCH resource at N slots/symbols before the beam activation time of the predicted beam as UE-assisted information for predicted beam in 322. FIGs. 3A-3D describe beam activation based on UE assistance. In some examples, elements 326 and 328 may be combined into a single block (e.g., the communication may be based on the indicated beam both being activated after the beam activation delay time and before the expiration of the beam validity duration. FIGs. 4A-4C support MAC-CE indications for beam activation.

FIGs. 4A-4C illustrate MAC-CE indication diagrams 410-430 for time domain beam predictions. Beam prediction indications based on MAC-CE may be associated with a flag (F) that indicates whether the predicted beam overwrites a previously indicated predicted beam that has not yet been activated, such as illustrated in FIG. 2C. If the network entity 304 determines that a previously indicated/predicted beam does not satisfy the activation conditions based on an updated beam measurement report received from the UE 102, the network entity may replace the previously indicated/predicted beam with a different beam indicated via MAC-CE. For example, the network entity 304 may receive 322 the second NACK for the previously indicated beam, which may cause the network entity 304 to select a different beam by sending the MAC-CE to overwrite the previously indicated beam.

FIG. 4A illustrates a TCI state activation/indication for time domain beam prediction based on a first MAC-CE indication diagram 410. The first MAC-CE indication diagram 410 includes an "action delay" field that is used to indicate the beam activation delay. The first MAC-CE indication diagram 410 also includes a field "F" that is used to indicate whether the MAC-CE is overwriting a previous MAC-CE for a previously predicted beam. Other fields of the first MAC-CE indication diagram 410 correspond to fields associated with predefined protocols.

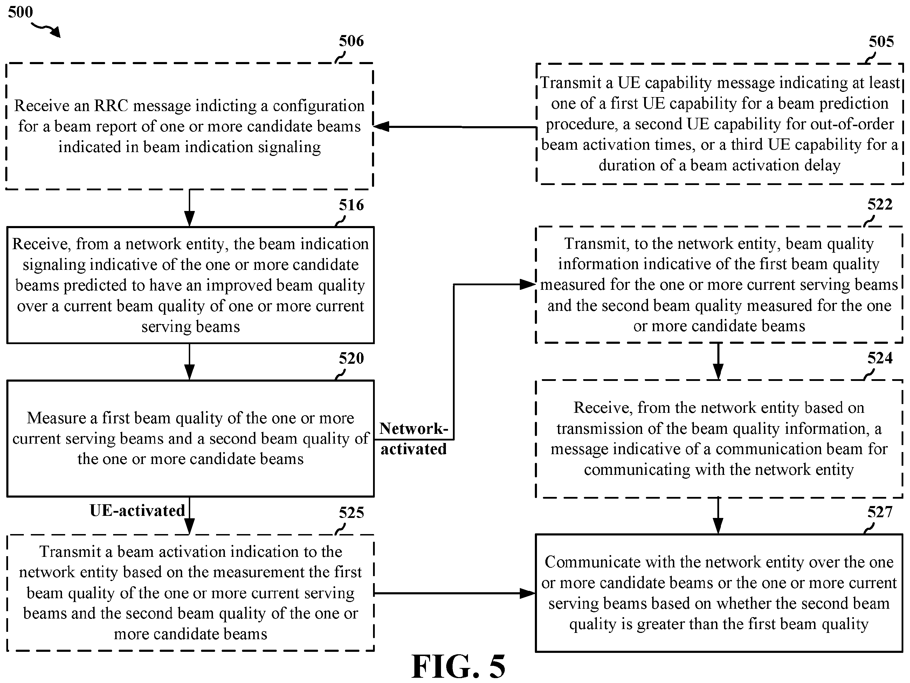

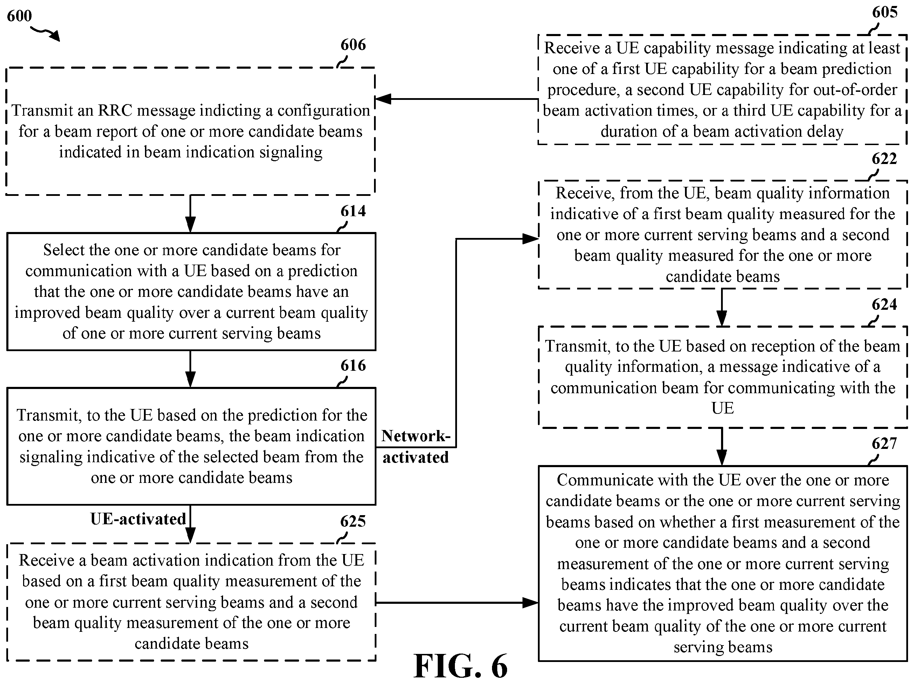

FIGs. 4B-4C illustrate example MAC-CE indications for updating spatial relation information. For example, FIG. 4B illustrates PUCCH spatial relation information for time domain beam prediction based on a second MAC-CE indication diagram 420. FIG. 4C illustrates SRS spatial relation information for time domain beam prediction based on a third MAC-CE indication diagram 430. The second/third MAC-CE indication diagrams 420-430 also include the action delay field and the F field, where an additional octet may be added to the MAC-CE indication diagram 430 to indicate the action delay and F fields. In some examples, the F field may be replaced by a reserved field R. Other fields of the second/third MAC-CE indication diagrams 420-430 correspond to fields associated with predefined protocols. FIGs. 3A-3D illustrate activation of predicted beams based on UE-assistance (FIGs. 3A and 3C) or UE beam activation (FIGs. 3B and 3D). FIGs. 5-6 show methods for implementing one or more aspects of FIGs. 3A-3D. In particular, FIG. 5 shows an implementation by the UE 102 of the one or more aspects of FIGs. 3A-3D. FIG. 6 shows an implementation by the network entity 304 of the one or more aspects of FIGs. 3A-3D.

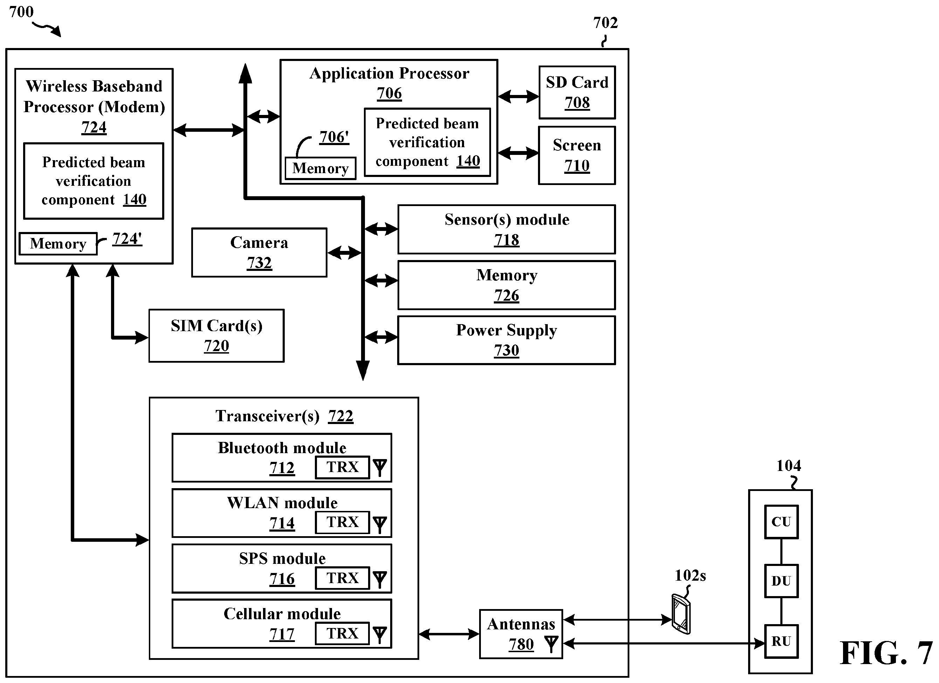

FIG. 5 illustrates a flowchart 500 of a method of wireless communication at a UE. With reference to FIGs. 1 and 7, the method may be performed by the UE 102, the UE apparatus 702, etc., which may include the memory 724' and which may correspond to the entire UE 102 or the UE apparatus 702, or a component of the UE 102 or the UE apparatus 702, such as the wireless baseband processor 724, and/or the application processor 706.

The UE 102 transmits 505 a UE capability message indicating at least one of a first UE capability for a beam prediction procedure, a second UE capability for out-of-order beam activation times, or a third UE capability for a duration of a beam activation delay. For example, referring to FIGs. 3A-3D, the UE 102 transmits 305 the UE capability message to the network entity 304.

The UE 102 receives 506 an RRC message indicating a configuration for a beam report of one or more candidate beams indicated in beam indication signaling. For example, referring to FIGs. 3A-3D, the UE 102 receives 306 a beam measurement and reporting configuration from the network entity 304.

The UE 102 receives 516, from a network entity, the beam indication signaling indicative of the one or more candidate beams predicted to have an improved beam quality over a current beam quality of one or more current serving beams. For example, referring to FIGs. 3A-3D, the UE 102 receives 316 predicted beam indication signaling from the network entity 304 based on the beam prediction performed 314 by the network entity 304. Referring to FIG. 2C, the neural network 226 may predict a small number of candidate beams.

The UE 102 measures 520 a first beam quality of the one or more current serving beams and a second beam quality of the one or more candidate beams. For example, referring to FIGs. 3A-3D, the UE 102 measures 320 a beam quality of the predicted beam and the current serving beam.

If a beam prediction procedure is network-activated, the UE 102 transmits 522, to the network entity 304, beam quality information indicative of the first beam quality measured for the one or more current serving beams and/or the second beam quality measured for the one or more candidate beams. For example, referring to FIGs. 3A and 3C, the UE 102 transmits 322, to the network entity 304, UE-assisted information for the predicted beam. The UE-assisted information indicates the measured 320 beam quality of the predicted beam and/or the current serving beam.

The UE 102 receives 524, from the network entity based on transmission of the beam quality information, a message indicating a communication beam for communicating with the network entity. For example, referring to FIGs. 3A and 3C, the UE 102 receives 324 a response message from the network entity 304 after transmitting 322 the UE-assisted information for the predicted beam to the network entity 304. The response message indicates a beam for communicating with the network entity 304 as well as a beam activation time or a beam validity duration.

If the beam prediction procedure is UE-activated, the UE 102 transmits 525 a beam activation indication to the network entity based on the measurement the first beam quality of the one or more current serving beams and the second beam quality of the one or more candidate beams. For example, referring to FIGs. 3B and 3D, the UE 102 transmits 325 a beam activation indication to the network entity 304 based on the measured 320 beam quality of the predicted beam and the current serving beam.

The UE 102 communicates 527 with the network entity over the one or more candidate beams or the one or more current serving beams based on whether the second beam quality is greater than the first beam quality. For example, referring to FIGs. 3A-3D, the UE 102 communicates 326/328 with the network entity 304 based on the indicated beam. If the indicated beam is network-activated, the activation duration 208 might begin when the UE 102 receives 324 the response message. If the indicated beam is UE-activated, the activation duration 208 might begin when the UE 102 transmits 325 the beam activation indication. FIG. 5 describes a method from a UE-side of a wireless communication link, whereas FIG. 6 describes a method from a network-side of the wireless communication link.

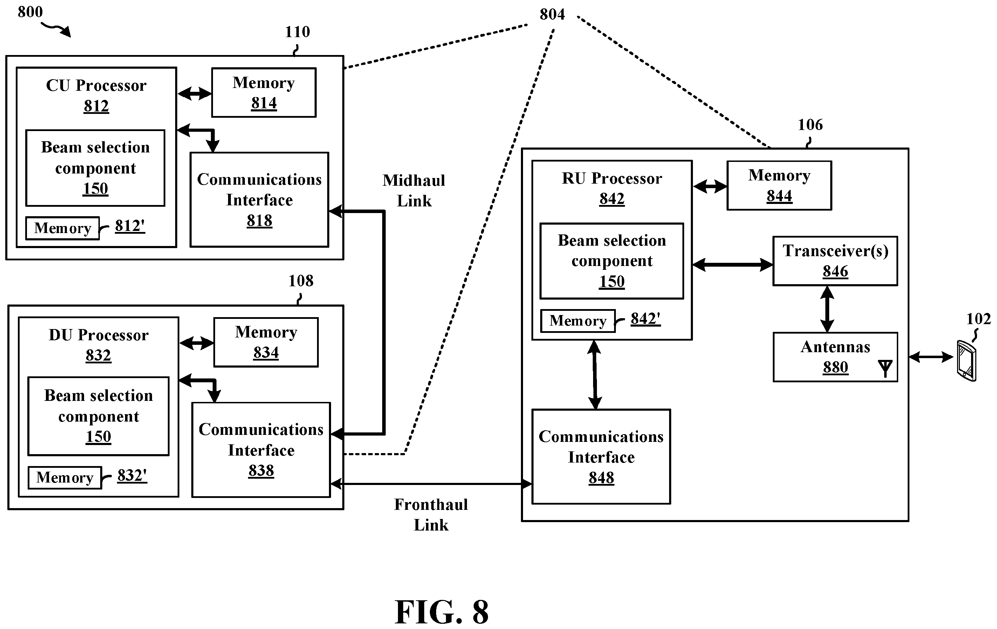

FIG. 6 is a flowchart 600 of a method of wireless communication at a network entity. With reference to FIGs. 1 and 8, the method may be performed by the base station 104 or one or more network entities 804 at the base station 104, which may correspond to the RU 106, the DU 108, the CU 110, an RU processor 842, a DU processor 832, a CU processor 812, etc. The base station 104 or the one or more network entities 804 at the base station 104 may include the memory 812'/832'/842', which may correspond to an entirety of the one or more network entities 804 or the base station 104, or a component of the one or more network entities 804 or the base station 104, such as the RU processor 842, the DU processor 832, or the CU processor 812.

The base station 104 or the one or more network entities 804 at the base station 104 transmits 606 an RRC message indicating a configuration for a beam report of one or more candidate beams indicated in beam indication signaling. For example, referring to FIGs. 3A-3D, the base station 104 or the one or more network entities 804 at the base station 104 transmits 306 a beam measurement and reporting configuration to the UE 102 for a predicted beam indicated in the predicted beam indication signaling.

The base station 104 or the one or more network entities 804 at the base station 104 receives 605 a UE capability message indicating at least one of a first UE capability for a beam prediction procedure, a second UE capability for out-of-order beam activation times, or a third UE capability for a duration of a beam activation delay. For example, referring to FIGs. 3A-3D, the network entity 304 receives 305 the UE capability message from the UE 102.

The base station 104 or the one or more network entities 804 at the base station 104 selects 614 the one or more candidate beams for communication with a UE based on a prediction that the one or more candidate beams have an improved beam quality over a current beam quality of one or more current serving beams. For example, referring to FIGs. 3A-3D, the base station 104 or the one or more network entities 804 at the base station 104 performs 314 a beam prediction procedure for selecting a predicted beam for communicating with the UE 102. The beam selection component 150 of the base station 104 or the one or more network entities 804 at the base station 104, such as the RU 106, the DU 108, and/or the CU 110 may perform the selection 614.

The base station 104 or the one or more network entities 804 at the base station 104 transmits 616, to the UE based on the prediction for the one or more candidate beams, the beam indication signaling indicative of the selected beam from the one or more candidate beams. For example, referring to FIGs. 3A-3D, the base station 104 or the one or more network entities 804 at the base station 104 transmits 316 predicted beam indication signaling to the UE 102 based on the beam prediction performed 314 by the network entity 304.

If a beam prediction procedure is network-activated, the base station 104 or the one or more network entities 804 at the base station 104 receives 622, from the UE, beam quality information indicative of a first beam quality measured for the one or more current serving beams and a second beam quality measured for the one or more candidate beams. For example, referring to FIGs. 3A and 3C, the base station 104 or the one or more network entities 804 at the base station 104 receives 322, from the UE 102, UE-assisted information for the predicted beam. The UE-assisted information may be indicative of the measured 320 beam quality of the predicted beam and/or the current serving beam.

The base station 104 or the one or more network entities 804 at the base station 104 transmits 624, to the UE based on reception of the beam quality information, a message indicative of a communication beam for communicating with the UE. For example, referring to FIGs. 3A and 3C, the base station 104 or the one or more network entities 804 at the base station 104 transmits 324 a response message to the UE 102 after receiving 322 the UE-assisted information for the predicted beam from the UE 102. The response message may be indicative of a beam for communicating with the UE 102.

If the beam prediction procedure is UE-activated, the base station 104 or the one or more network entities 804 at the base station 104 receives 625 a beam activation indication from the UE based on a first beam quality measurement of the one or more current serving beams and a second beam quality measurement of the one or more candidate beams. For example, referring to FIGs. 3B and 3D, the base station 104 or the one or more network entities 804 at the base station 104 receives 325 a beam activation indication from the UE 102 based on the measured 320 beam quality of the predicted beam and the current serving beam.

The base station 104 or the one or more network entities 804 at the base station 104 communicates 627 with the UE over the one or more candidate beams or the one or more current serving beams based on whether a first measurement of the one or more candidate beams and a second measurement of the one or more current serving beams indicates that the one or more candidate beams have the improved beam quality over the current beam quality of the one or more current serving beams. For example, referring to FIGs. 3A-3D, the base station 104 or the one or more network entities 804 at the base station 104 communicates 326/328 with the UE 102 based on the indicated beam. If the indicated beam is network-activated, the activation duration 208 might begin when the UE 102 receives 324 the response message. If the indicated beam is UE-activated, the activation duration 208 might begin when the UE 102 transmits 325 the beam activation indication. A UE apparatus 702, as described in FIG. 7, may perform the method of flowchart 500. The base station 104 or the one or more network entities 804 at the base station 104, as described in FIG. 8, may perform the method of flowchart 600.

FIG. 7 is a diagram 700 illustrating an example of a hardware implementation for a UE apparatus 702. The apparatus 702 may be the UE 102, a component of the UE 102, or may implement UE functionality. In some aspects, the apparatus 702 may include a wireless baseband processor 724 (also referred to as a modem) coupled to one or more transceivers 722 (e.g., wireless RF transceiver). The wireless baseband processor 724 may include on-chip memory 724'. In some aspects, the apparatus 702 may further include one or more subscriber identity modules (SIM) cards 720 and an application processor 706 coupled to a secure digital (SD) card 708 and a screen 710. The application processor 706 may include on-chip memory 706'.

The apparatus 702 may further include a Bluetooth module 712, a WLAN module 714, an SPS module 716 (e.g., GNSS module), and a cellular module 717 within the one or more transceivers 722. The Bluetooth module 712, the WLAN module 714, the SPS module 716, and the cellular module 717 may include an on-chip transceiver (TRX) (or in some cases, just a receiver (RX)). The Bluetooth module 712, the WLAN module 714, the SPS module 716, and the cellular module 717 may include their own dedicated antennas and/or utilize the antennas 780 for communication. The apparatus 702 may further include one or more sensor modules 718 (e.g., barometric pressure sensor / altimeter; motion sensor such as inertial management unit (IMU), gyroscope, and/or accelerometer(s); light detection and ranging (LIDAR), radio assisted detection and ranging (RADAR), sound navigation and ranging (SONAR), magnetometer, audio and/or other technologies used for positioning), additional modules of memory 726, a power supply 730, and/or a camera 732.

The wireless baseband processor 724 communicates through the transceiver(s) 722 via one or more antennas 780 with another UE 102s and/or with an RU associated with a base station 104. The wireless baseband processor 724 and the application processor 706 may each include a computer-readable medium / memory 724', 706', respectively. The additional modules of memory 726 may also be considered a computer-readable medium / memory. Each computer-readable medium / memory 724', 706', 726 may be non-transitory. The wireless baseband processor 724 and the application processor 706 are each responsible for general processing, including the execution of software stored on the computer-readable medium / memory. The software, when executed by the wireless baseband processor 724 / application processor 706, causes the wireless baseband processor 724 / application processor 706 to perform the various functions described. The computer-readable medium / memory may also be used for storing data that is manipulated by the wireless baseband processor 724 / application processor 706 when executing software. The wireless baseband processor 724 / application processor 706 may be a component of the UE 102. The apparatus 702 may be a processor chip (modem and/or application) and include just the wireless baseband processor 724 and/or the application processor 706, and in another configuration, the apparatus 702 may be the entire UE 102 and include the additional modules of the apparatus 702.

As discussed, the predicted beam verification component 140 is configured to receive, from a network entity, beam indication signaling indicative of one or more candidate beams predicted to have an improved beam quality over a current beam quality of one or more current serving beams. The predicted beam verification component 140 is further configured to measure a first beam quality of the one or more current serving beams and a second beam quality of the one or more candidate beams and communicate with the network entity over the one or more candidate beams or the one or more current serving beams based on whether the second beam quality is greater than the first beam quality. The predicted beam verification component 140 may be within the wireless baseband processor 724, the application processor 706, or both the wireless baseband processor 724 and the application processor 706. The predicted beam verification component 140 may be one or more hardware components specifically configured to carry out the stated processes/algorithm, implemented by one or more processors configured to perform the stated processes/algorithm, stored within a computer-readable medium for implementation by one or more processors, or some combination thereof.

As shown, the apparatus 702 may include a variety of components configured for various functions. In one configuration, the apparatus 702, and in particular the wireless baseband processor 724 and/or the application processor 706, includes means for receiving, from a network entity, beam indication signaling indicative of one or more candidate beams predicted to have an improved beam quality over a current beam quality of one or more current serving beams; means for measuring a first beam quality of the one or more current serving beams and a second beam quality of the one or more candidate beams; and means for communicating with the network entity over the one or more candidate beams or the one or more current serving beams based on whether the second beam quality is greater than the first beam quality.

The apparatus 702 further includes means for receiving an RRC message indicating a configuration for a beam report of the one or more candidate beams indicated in the beam indication signaling. The apparatus 702 further includes means for receiving, from the network entity, control signaling indicative of uplink resources for transmitting the beam report to the network entity. The apparatus 702 further includes means for transmitting, to the network entity, beam quality information indicative of the first beam quality measured for the one or more current serving beams and the second beam quality measured for the one or more candidate beams; and means for receiving, from the network entity based on the transmitting the beam quality information, a message indicative of a communication beam for the communicating with the network entity. The apparatus 702 further includes means for transmitting an ACK to the network entity that indicates at least one of: the first beam quality of the one or more current serving beams being below a first threshold, the second beam quality of the one or more candidate beams being above a second threshold, or the second beam quality of the one or more candidate beams being above the first beam quality of the one or more current serving beams by a third threshold. The apparatus 702 further includes means for transmitting a beam activation indication to the network entity based on the measuring the first beam quality of the one or more current serving beams and the second beam quality of the one or more candidate beams. The means may be the predicted beam verification component 140 of the apparatus 702 configured to perform the functions recited by the means.

FIG. 8 is a diagram 800 illustrating an example of a hardware implementation for one or more network entities 804. The one or more network entities 804 may be a base station, a component of the base station, or may implement base station functionality. The one or more network entities 804 may include at least one of a CU 110, a DU 108, or an RU 106. For example, depending on where neural network processing power is available, the beam selection component 150 may sit at one or more network entities 804 such as the CU 110; both the CU 110 and the DU 108; each of the CU 110, the DU 108, and the RU 106; the DU 108; both the DU 108 and the RU 106; or the RU 106.

The CU 110 may include a CU processor 812. The CU processor 812 may include on-chip memory 812'. In some aspects, the CU 110 may further include additional memory modules 814 and a communications interface 818. The CU 110 communicates with the DU 108 through a midhaul link, such as an F1 interface. The DU 108 may include a DU processor 832. The DU processor 832 may include on-chip memory 832'. In some aspects, the DU 108 may further include additional memory modules 834 and a communications interface 838. The DU 108 communicates with the RU 106 through a fronthaul link. The RU 106 may include an RU processor 842. The RU processor 842 may include on-chip memory 842'. In some aspects, the RU 106 may further include additional memory modules 844, one or more transceivers 846, antennas 880, and a communications interface 848. The RU 106 communicates wirelessly with the UE 102.

The on-chip memory 812', 832', 842' and the additional memory modules 814, 834, 844 may each be considered a computer-readable medium / memory. Each computer-readable medium / memory may be non-transitory. Each of the processors 812, 832, 842 is responsible for general processing, including the execution of software stored on the computer-readable medium / memory. The software, when executed by the corresponding processor(s) causes the processor(s) to perform the various described functions. The computer-readable medium / memory may also be used for storing data that is manipulated by the processor(s) when executing software.

As discussed, the beam selection component 150 is configured to select one or more candidate beams for communication with a UE based on a prediction that the one or more candidate beams have an improved beam quality over a current beam quality of one or more current serving beams. The beam selection component 150 is further configured to transmit, to the UE based on the prediction for the one or more candidate beams, beam indication signaling indicative of a selected beam from the one or more candidate beams. The beam selection component 150 is further configured to communicate with the UE over the one or more candidate beams or the one or more current serving beams based on whether a first measurement of the one or more candidate beams and a second measurement of the one or more current serving beams indicates that the one or more candidate beams have the improved beam quality over the current beam quality of the one or more current serving beams. The beam selection component 150 may be within one or more processors of one or more of the CU 110, DU 108, and the RU 106. The beam selection component 150 may be one or more hardware components specifically configured to carry out the stated processes/algorithm, implemented by one or more processors configured to perform the stated processes/algorithm, stored within a computer-readable medium for implementation by one or more processors, or some combination thereof.

The one or more network entities 804 may include a variety of components configured for various functions. In one configuration, the one or more network entities 804 includes means for selecting one or more candidate beams for communication with a UE based on a prediction that the one or more candidate beams have an improved beam quality over a current beam quality of one or more current serving beams; means for transmitting, to the UE based on the prediction for the one or more candidate beams, beam indication signaling indicative of a selected beam from the one or more candidate beams; and means for communicating with the UE over the one or more candidate beams or the one or more current serving beams based on whether a first measurement of the one or more candidate beams and a second measurement of the one or more current serving beams indicates that the one or more candidate beams have the improved beam quality over the current beam quality of the one or more current serving beams.

The one or more network entities 804 further includes means for transmitting an RRC message indicating a configuration for a beam report of the one or more candidate beams indicated in the beam indication signaling. The one or more network entities 804 further includes means for transmitting, to the UE, control signaling indicative of uplink resources for receiving the beam report from the UE. The one or more network entities 804 further includes means for receiving, from the UE, beam quality information indicative of a first beam quality measured for the one or more current serving beams and a second beam quality measured for the one or more candidate beams; and means for transmitting, to the UE based on the receiving the beam quality information, a message indicative of a communication beam for the communicating with the UE. The one or more network entities 804 further includes means for receiving an ACK from the UE that indicates at least one of: the first beam quality of the one or more current serving beams being below a first threshold, the second beam quality of the one or more candidate beams being above a second threshold, or the second beam quality of the one or more candidate beams being above the first beam quality of the one or more current serving beams by a third threshold. The one or more network entities 804 further includes means for receiving a beam activation indication from the UE based on a first beam quality measurement of the one or more current serving beams and a second beam quality measurement of the one or more candidate beams. The means may be the beam selection component 150 of the one or more network entities 804 configured to perform the functions recited by the means.

The specific order or hierarchy of blocks in the processes and flowcharts disclosed herein is an illustration of example approaches. Hence, the specific order or hierarchy of blocks in the processes and flowcharts may be rearranged. Some blocks may also be combined or deleted. Optional blocks of the processes and flowcharts may be indicated by dashed lines. The accompanying method claims present elements of the various blocks in an example order, and are not limited to the specific order or hierarchy presented in the claims, processes, and flowcharts.

The detailed description set forth herein describes various configurations in connection with the drawings and does not represent the only configurations in which the concepts described herein may be practiced. The detailed description includes specific details for the purpose of providing a thorough explanation of various concepts. However, these concepts may be practiced without these specific details. In some instances, well known structures and components are shown in block diagram form in order to avoid obscuring such concepts.

Aspects of wireless communication systems, such as telecommunication systems, are presented with reference to various apparatuses and methods. These apparatuses and methods are described in the following detailed description and are illustrated in the accompanying drawings by various blocks, components, circuits, processes, call flows, systems, algorithms, etc. (collectively referred to as "elements"). These elements may be implemented using electronic hardware, computer software, or combinations thereof. Whether such elements are implemented as hardware or software depends upon the particular application and design constraints imposed on the overall system.

An element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems-on-chip (SoC), baseband processors, field programmable gate arrays (FPGAs), programmable logic devices (PLDs), state machines, gated logic, discrete hardware circuits, and other similar hardware configured to perform the various functionality described throughout this disclosure. One or more processors in the processing system may execute software, which may be referred to as software, firmware, middleware, microcode, hardware description language, or otherwise. Software shall be construed broadly to mean instructions, instruction sets, code, code segments, program code, programs, subprograms, software components, applications, software applications, software packages, routines, subroutines, objects, executables, threads of execution, procedures, functions, or any combination thereof.

If the functionality described herein is implemented in software, the functions may be stored on, or encoded as, one or more instructions or code on a computer-readable medium, such as a non-transitory computer-readable storage medium. Computer-readable media includes computer storage media and can include a random-access memory (RAM), a read-only memory (ROM), an electrically erasable programmable ROM (EEPROM), optical disk storage, magnetic disk storage, other magnetic storage devices, combinations of these types of computer-readable media, or any other medium that can be used to store computer executable code in the form of instructions or data structures that can be accessed by a computer. Storage media may be any available media that can be accessed by a computer.

Aspects, implementations, and/or use cases described herein may be implemented across many differing platform types, devices, systems, shapes, sizes, and packaging arrangements. For example, the aspects, implementations, and/or use cases may come about via integrated chip implementations and other non-module-component based devices, such as end-user devices, vehicles, communication devices, computing devices, industrial equipment, retail/purchasing devices, medical devices, artificial intelligence (AI)-enabled devices, machine learning (ML)-enabled devices, etc. The aspects, implementations, and/or use cases may range from chip-level or modular components to non-modular or non-chip-level implementations, and further to aggregate, distributed, or original equipment manufacturer (OEM) devices or systems incorporating one or more techniques described herein.

Devices incorporating the aspects and features described herein may also include additional components and features for the implementation and practice of the claimed and described aspects and features. For example, transmission and reception of wireless signals necessarily includes a number of components for analog and digital purposes, such as hardware components, antennas, RF-chains, power amplifiers, modulators, buffers, processor(s), interleavers, adders/summers, etc. Techniques described herein may be practiced in a wide variety of devices, chip-level components, systems, distributed arrangements, aggregated or disaggregated components, end-user devices, etc., of varying configurations.

The description herein is provided to enable a person skilled in the art to practice the various aspects described herein. Various modifications to these aspects will be readily apparent to those skilled in the art, and the generic principles defined herein may be applied to other aspects. Thus, the claims are not limited to the aspects described herein, but are to be interpreted in view of the full scope of the present disclosure consistent with the language of the claims.

Reference to an element in the singular does not mean "one and only one" unless specifically stated, but rather "one or more." Terms such as "if," "when," and "while" do not imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. Unless specifically stated otherwise, the term "some" refers to one or more. Combinations such as "at least one of A, B, or C" or "one or more of A, B, or C" include any combination of A, B, and/or C, such as A and B, A and C, B and C, or A and B and C, and may include multiples of A, multiples of B, and/or multiples of C, or may include A only, B only, or C only. Sets should be interpreted as a set of elements where the elements number one or more.

Unless otherwise specifically indicated, ordinal terms such as "first" and "second" do not necessarily imply an order in time, sequence, numerical value, etc., but are used to distinguish between different instances of a term or phrase that follow each ordinal term.

Structural and functional equivalents to elements of the various aspects described throughout this disclosure that are known or later come to be known to those of ordinary skill in the art are expressly incorporated herein by reference and are encompassed by the claims. The words "module," "mechanism," "element," "device," and the like may not be a substitute for the word "means." As such, no claim element is to be construed as a means plus function unless the element is expressly recited using the phrase "means for." As used herein, the phrase "based on" shall not be construed as a reference to a closed set of information, one or more conditions, one or more factors, or the like. In other words, the phrase "based on A", where "A" may be information, a condition, a factor, or the like, shall be construed as "based at least on A" unless specifically recited differently.

The following examples are illustrative only and may be combined with other examples or teachings described herein, without limitation.

Example 1 is a method of wireless communication at a UE, including: receiving, from a network entity, beam indication signaling indicative of one or more candidate beams predicted to provide an improved beam quality over a current beam quality of one or more current serving beams, an activation of the one or more candidate beams occurring after a beam activation delay time; measuring a first beam quality of the one or more current serving beams and a second beam quality of the one or more candidate beams; and communicating with the network entity over at least one of: the one or more candidate beams or the one or more current serving beams based on whether the second beam quality is greater than the first beam quality.

Example 2 may be combined with example 1 and includes that the communicating with the network entity over the one or more candidate beams occurs at least one of: after the beam activation delay time for the one or more candidate beams or before a validity duration expires for the one or more candidate beams, parameters for the beam activation delay time and the validity duration being indicated for each of the one or more candidate beams.

Example 3 may be combined with any of examples 1-2 and includes that the communicating with the network entity occurs over the one or more candidate beams when the second beam quality is greater than the first beam quality, and where the communicating with the network entity occurs over only the one or more current serving beams when the second beam quality is less than or equal to the first beam quality.

Example 4 may be combined with example 1 and further includes receiving an RRC message indicating a configuration for a beam report of the one or more candidate beams indicated in the beam indication signaling.

Example 5 may be combined with any of examples 1-4 and further includes receiving, from the network entity, control signaling indicative of uplink resources for transmitting the beam report to the network entity.

Example 6 may be combined with any of examples 1-5 and includes that the beam indication signaling indicates at least one of a TCI state or spatial relation information for the one or more candidate beams.

Example 7 may be combined with any of examples 1-6 and includes that at least one of the beam indication signaling or the beam activation delay time for the one or more candidate beams is indicated using a MAC-CE or DCI.

Example 8 may be combined with any of examples 1-6 and includes that the beam indication signaling includes an information element (IE) that indicates whether at least one of a TCI state or spatial relation information replaces at least one of a previous TCI state or previous spatial relation information, the beam indication signaling being sent to the UE using the MAC-CE or the DCI and being indicated to the UE based on at least one of a starting CCE index, a search space for the DCI, or a CORESET for the DCI.

Example 9 may be combined with any of examples 1-8 and further includes transmitting, to the network entity, beam quality information indicative of the first beam quality measured for the one or more current serving beams and the second beam quality measured for the one or more candidate beams; and receiving, from the network entity based on the transmitting the beam quality information, a message indicating at least one of: the one or more candidate beams or the one or more current serving beams for the communicating with the network entity after the beam activation time.

Example 10 may be combined with example 9 and includes that the beam quality information indicates at least one of L1-RSRP information or L1-SINR information for the at least one of: the one or more candidate beams or the one or more current serving beams.

Example 11 may be combined with any of examples 1-10 and includes that the transmitting the beam quality information to the network entity includes using dedicated PUCCH resources configured via the RRC signaling or using the MAC-CE to indicate at least one of a serving cell index, a BWP index, the first beam quality of the one or more current serving beams, or the second beam quality of the one or more candidate beams.

Example 12 may be combined with any of examples 1-11 and further includes transmitting an ACK to the network entity that indicates at least one of: the first beam quality of the one or more current serving beams being below a first threshold, the second beam quality of the one or more candidate beams being above a second threshold, or the second beam quality of the one or more candidate beams being above the first beam quality of the one or more current serving beams by a third threshold.

Example 13 may be combined with example 12 and includes that transmitting the ACK to the network entity includes multiplexing the ACK with other information transmitted to the network entity.

Example 14 may be combined with any of examples 1-13 and includes that the transmitting the beam quality information to the network entity starts the beam activation delay time a first number of slots before the activation of the one or more candidate beams, the first number of slots being based on a predefined protocol or configured based on the RRC signaling.

Example 15 may be combined with any of examples 1-14 and includes that the beam quality information indicates that the activation of the one or more candidate beams is within a second number of slots after the beam activation delay time for the one or more candidate beams, the second number of slots being based on a predefined protocol or configured based on the RRC signaling.

Example 16 may be combined with any of examples 1-8 and further includes transmitting a beam activation indication to the network entity based on the measuring the first beam quality of the one or more current serving beams and the second beam quality of the one or more candidate beams.

Example 17 is a method of wireless communication at a network entity, including: selecting one or more candidate beams for communication with a UE based on a prediction that the one or more candidate beams provide an improved beam quality over a current beam quality of one or more current serving beams, an activation of the one or more candidate beams occurring after a beam activation delay time; transmitting, to the UE based on the prediction for the one or more candidate beams, beam indication signaling indicating the one or more candidate beams predicted to provide the improved beam quality; and communicating with the UE over at least one of the one or more candidate beams or the one or more current serving beams based on whether a first measurement of the one or more candidate beams and a second measurement of the one or more current serving beams indicates that the one or more candidate beams provide the improved beam quality over the current beam quality of the one or more current serving beams.

Example 18 may be combined with example 17 an includes that the communicating with the UE over the one or more candidate beams occurs at least one of: after the beam activation delay time associated with the one or more candidate beams or before a validity duration expires for the one or more candidate beams.

Example 19 may be combined with any of examples 17-18 and includes that the communicating with the UE occurs over only the one or more current serving beams when a first beam quality of the one or more current serving beams is greater than or equal to a second beam quality of the one or more candidate beams, and where the communicating with the UE occurs over the one or more candidate beams when the first beam quality of the one or more current serving beams is less than the second beam quality of the one or more candidate beams.

Example 20 may be combined with example 17 and further includes transmitting an RRC message indicating a configuration for a beam report of the one or more candidate beams indicated in the beam indication signaling.

Example 21 may be combined with any of examples 17-20 and further includes transmitting, to the UE, control signaling indicative of uplink resources for receiving the beam report from the UE.

Example 22 may be combined with any of examples 17-21 and includes that the beam indication signaling indicates at least one of a TCI state or spatial relation information for the one or more candidate beams.

Example 23 may be combined with any of examples 17-22 and includes that at least one of the beam indication signaling or the beam activation delay time for the one or more candidate beams is indicated to the UE using a MAC-CE or DCI.

Example 24 may be combined with any of examples 17-22 and includes that the beam indication signaling includes an IE that indicates whether at least one of a TCI state or spatial relation information replaces at least one of a previous TCI state or previous spatial relation information, the IE being sent to the UE using the MAC-CE or the DCI and being indicated to the UE based on at least one of a CCE index, a search space for the DCI, or a CORESET for the DCI.

Example 25 may be combined with any of examples 17-24 and further includes receiving, from the UE, beam quality information indicative of a first beam quality measured for the one or more current serving beams and a second beam quality measured for the one or more candidate beams; and transmitting, to the UE based on the receiving the beam quality information, a message indicating at least one of: the one or more candidate beams or the one or more current serving beams.

Example 26 may be combined with example 25 and includes that the beam quality information indicates at least one of L1-RSRP information or L1-SINR information for at least one of the one or more candidate beams or the one or more current serving beams.

Example 27 may be combined with any of examples 17-26 and includes that the receiving the beam quality information from the UE includes using dedicated PUCCH resources configured via the RRC signaling or using the MAC-CE to indicate at least one of a serving cell index, a BWP index, the first beam quality of the one or more current serving beams, or the second beam quality of the one or more candidate beams.

Example 28 may be combined with any of examples 17-27 and further includes receiving an ACK from the UE that indicates at least one of: the first beam quality of the one or more current serving beams being below a first threshold, the second beam quality of the one or more candidate beams being above a second threshold, or the second beam quality of the one or more candidate beams being above the first beam quality of the one or more current serving beams by a third threshold.

Example 29 may be combined with example 28 and includes that the receiving the ACK from the UE includes the ACK being multiplexed with other information received from the UE.

Example 30 may be combined with any of examples 17-29 and includes that the receiving the beam quality information from the UE occurs a first number of slots before the beam activation delay time for the one or more candidate beams, the first number of slots being based on a predefined protocol or configured based on the RRC signaling.

Example 31 may be combined with any of examples 17-30 and includes that the beam quality information indicates that the activation of the one or more candidate beams is within a second number of slots after the beam activation delay time for the one or more candidate beams, the second number of slots being based on a predefined protocol or configured based on the RRC signaling.

Example 32 may be combined with any of examples 17-24 and further includes receiving a beam activation indication from the UE based on a first beam quality measurement of the one or more current serving beams and a second beam quality measurement of the one or more candidate beams.

Example 33 is an apparatus for wireless communication for implementing a method as in any of examples 1-32.

Example 34 is an apparatus for wireless communication including means for implementing a method as in any of examples 1-32.

Example 35 is a non-transitory computer-readable medium storing computer executable code, the code when executed by at least one processor causes the at least one processor to implement a method as in any of examples 1-32.

Further examples are listed below.
1. A method of wireless communication at a user equipment (UE), comprising:
   receiving, from a network entity, beam indication signaling indicative of one or more candidate beams predicted to provide an improved beam quality over a current beam quality of one or more current serving beams, an activation of the one or more candidate beams occurring after a beam activation delay time;
   measuring a first beam quality of the one or more current serving beams and a second beam quality of the one or more candidate beams; and
   communicating with the network entity over at least one of: the one or more candidate beams or the one or more current serving beams based on whether the second beam quality is greater than the first beam quality.
2. The method of example 1, wherein the communicating with the network entity over the one or more candidate beams occurs at least one of: after the beam activation delay time for the one or more candidate beams or before a validity duration expires for the one or more candidate beams.
3. The method of any of examples 1-2, wherein the communicating with the network entity occurs over the one or more candidate beams when the second beam quality is greater than the first beam quality, and wherein the communicating with the network entity occurs over only the one or more current serving beams when the second beam quality is less than or equal to the first beam quality.
4. The method of example 1, further comprising receiving a radio resource control (RRC) message indicating a configuration for a beam report of the one or more candidate beams indicated in the beam indication signaling.
5. The method of any of examples 1-4, further comprising receiving, from the network entity, control signaling indicative of uplink resources for transmitting the beam report to the network entity.
6. The method of any of examples 1-5, wherein the beam indication signaling indicates at least one of a transmission configuration indicator (TCI) state or spatial relation information for the one or more candidate beams.
7. The method of any of examples 1-6, wherein at least one of the beam indication signaling or the beam activation delay time for the one or more candidate beams is indicated using a medium access control-control element (MAC-CE) or downlink control information (DCI).
8. The method of any of examples 1-6, wherein the beam indication signaling includes an information element (IE) that indicates whether at least one of a TCI state or spatial relation information replaces at least one of a previous TCI state or previous spatial relation information, the beam indication signaling being sent to the UE using the MAC-CE or the DCI.
9. The method of any of examples 1-8, further comprising:
   transmitting, to the network entity, beam quality information indicative of the first beam quality measured for the one or more current serving beams and the second beam quality measured for the one or more candidate beams; and
   receiving, from the network entity based on the transmitting the beam quality information, a message indicating the at least one of: the one or more candidate beams or the one or more current serving beams for the communicating with the network entity.
10. The method of example 9, wherein the beam quality information indicates at least one of layer 1 (L1) reference signal received power (RSRP) (L1-RSRP) information or L1 signal-to-interference-plus-noise (SINR) (L1-SINR) information for the at least one of: the one or more candidate beams or the one or more current serving beams.
11. The method of any of examples 9-10, wherein the transmitting the beam quality information to the network entity includes using dedicated physical uplink control channel (PUCCH) resources configured via the RRC signaling or using the MAC-CE to indicate at least one of a serving cell index, a bandwidth part (BWP) index, the first beam quality of the one or more current serving beams, or the second beam quality of the one or more candidate beams.
12. The method of any of examples 1-11, further comprising transmitting an acknowledgment (ACK) to the network entity that indicates at least one of:
   the first beam quality of the one or more current serving beams being below a first threshold,
   the second beam quality of the one or more candidate beams being above a second threshold, or
   the second beam quality of the one or more candidate beams being above the first beam quality of the one or more current serving beams by a third threshold.
13. The method of any of examples 9-12, wherein the transmitting the beam quality information to the network entity starts the beam activation delay time a first number of slots before the activation of the one or more candidate beams, the first number of slots being based on a predefined protocol or configured based on the RRC signaling.
14. The method of any of examples 9-13, wherein the beam quality information indicates that the activation of the one or more candidate beams is within a second number of slots after the beam activation delay time for the one or more candidate beams, the second number of slots being based on a predefined protocol or configured based on the RRC signaling.
15. The method of any of examples 1-8, further comprising transmitting a beam activation indication to the network entity based on the measuring the first beam quality of the one or more current serving beams and the second beam quality of the one or more candidate beams.
16. A method of wireless communication at a network entity, comprising:
   selecting one or more candidate beams for communication with a user equipment (UE) based on a prediction that the one or more candidate beams provide an improved beam quality over a current beam quality of one or more current serving beams, an activation of the one or more candidate beams occurring after a beam activation delay time;
   transmitting, to the UE based on the prediction for the one or more candidate beams, beam indication signaling indicating the one or more candidate beams predicted to provide the improved beam quality; and
      communicating with the UE over at least one of: the one or more candidate beams or the one or more current serving beams based on whether a first measurement of the one or more candidate beams and a second measurement of the one or more current serving beams indicates that the one or more candidate beams provide the improved beam quality over the current beam quality of the one or more current serving beams.
17. The method of example 16, wherein the communicating with the UE over the one or more candidate beams occurs at least one of: after the beam activation delay time associated with the one or more candidate beams or before a validity duration expires for the one or more candidate beams.
18. The method of any of examples 16-17, wherein the communicating with the UE occurs over only the one or more current serving beams when a first beam quality of the one or more current serving beams is greater than or equal to a second beam quality of the one or more candidate beams, and wherein the communicating with the UE occurs over the one or more candidate beams when the first beam quality of the one or more current serving beams is less than the second beam quality of the one or more candidate beams.
19. An apparatus for wireless communication comprising a memory and at least one processor coupled to the memory and configured to implement a method as in any of examples 1-18.

## Claims

1. A method of wireless communication at a user equipment, UE, (102) comprising:
receiving, from a network entity (304), beam indication signaling indicating a candidate beam predicted to provide an improved beam quality over a current beam quality of a current serving beam;
measuring (320) a first beam quality of the current serving beam and a second beam quality of the candidate beam;
transmitting (322), to the network entity (304), a beam quality report comprising at least one of the first beam quality of the current serving beam or the second beam quality of the candidate beam; and
communicating (326) with the network entity (304) over at least one of: the candidate beam or the current serving beam based on whether the second beam quality is greater than the first beam quality by a threshold.

2. The method of claim 1, further comprising:
receiving, from a network entity (304), a request for the beam quality report for the candidate beam and the current serving beam.

3. The method of any of claims 1-2, wherein the beam quality report includes at least one beam index and a corresponding beam quality information including a layer 1 reference signal received power, L1-RSRP.

4. The method of any of claims 1-3, wherein the beam quality report indicates whether the candidate serving beam satisfies the threshold of the second beam quality being greater than the first beam quality for activation of the candidate beam.

5. The method of claim 4, wherein the threshold for the activation of the candidate beam is configured based on higher layer signaling.

6. The method of any of claims 1-5, wherein the beam quality report is transmitted based on the second beam quality being greater than the first beam quality by the threshold.

7. The method of claim 6, wherein the beam quality report is transmitted via UE-assisted information, UAI.

8. A method of wireless communication at a network entity (304), comprising:
transmitting, to a user equipment, UE, (102), beam indication signaling indicating of a candidate beam predicted to provide an improved beam quality over a current beam quality of a current serving beam;
receiving (322), from the UE (102), a beam quality report comprising at least one of a first beam quality of the current serving beam or a second beam quality of the candidate beam; and
communicating (326) with the UE (102) over at least one of: the candidate beam or the current serving beam based on whether the second beam quality is greater than the first beam quality by a threshold.

9. The method of claim 8, further comprising:
transmitting, to the UE (102), a request for the beam quality report for the candidate beam and the current serving beam.

10. The method of any of claims 8-9, wherein the beam quality report includes at least one beam index and a corresponding beam quality information including a layer 1 reference signal received power, L1-RSRP.

11. The method of any of claims 8-10, wherein the beam quality report indicates whether the candidate serving beam satisfies the threshold of the second beam quality being greater than the first beam quality for activation of the candidate beam.

12. The method of claim 11, wherein the threshold for the activation of the candidate beam is configured based on higher layer signaling.

13. The method of any of claims 8-12, wherein the beam quality report is received based on the second beam quality being greater than the first beam quality by the threshold.

14. The method of claim 13, wherein the beam quality report is received in UE-assisted information, UAI.

15. An apparatus for wireless communication comprising a memory and at least one processor coupled to the memory and configured to implement a method as in any of claims 1-14.
